(19) Europäisches Patentamt
European Patent Office
Office européen des brevets

(11) **EP 1 161 782 B1**

(12) **EUROPÄISCHE PATENTSCHRIFT**

(45) Veröffentlichungstag und Bekanntmachung des Hinweises auf die Patenterteilung:
**09.10.2002 Patentblatt 2002/41**

(51) Int Cl.⁷: **H01S 3/098**, H01S 3/139, H01S 3/081, G01J 9/02, G01N 21/17

(21) Anmeldenummer: **00910810.1**

(22) Anmeldetag: **10.03.2000**

(86) Internationale Anmeldenummer:
**PCT/EP00/02135**

(87) Internationale Veröffentlichungsnummer:
**WO 00/055948 (21.09.2000 Gazette 2000/38)**

(54) **ERZEUGUNG STABILISIERTER, ULTRAKURZER LICHTPULSE UND DEREN ANWENDUNG ZUR SYNTHESE OPTISCHER FREQUENZEN**

GENERATION OF STABILISED, ULTRA-SHORT LIGHT PULSES AND THE USE THEREOF FOR SYNTHESISING OPTICAL FREQUENCIES

SYSTEME DE PRODUCTION D'IMPULSIONS LUMINEUSES ULTRACOURTES STABILISEES ET SON UTILISATION POUR FAIRE LA SYNTHESE DE FREQUENCES OPTIQUES

(84) Benannte Vertragsstaaten:
**AT BE CH CY DE DK ES FI FR GB GR IE IT LI LU MC NL PT SE**

(30) Priorität: **12.03.1999 DE 19911103**

(43) Veröffentlichungstag der Anmeldung:
**12.12.2001 Patentblatt 2001/50**

(73) Patentinhaber: **Max-Planck-Gesellschaft zur Förderung der Wissenschaften e.V. 80539 München (DE)**

(72) Erfinder:
• **HOLZWARTH, Ronald**
  **D-71522 Backnang (DE)**
• **REICHERT, Jörg**
  **D-67061 Ludwigshafen (DE)**
• **UDEM, Thomas**
  **D-80331 München (DE)**
• **HÄNSCH, Theodor, W.**
  **D-80333 München (DE)**

(74) Vertreter: **Hertz, Oliver, Dr. v. Bezold & Sozien, Akademiestrasse 7 80799 München (DE)**

(56) Entgegenhaltungen:
**US-A- 4 815 085        US-A- 5 212 698**
**US-A- 5 235 605**

• **T.UDEM ET AL.: "Accuracy of optical frequency comb generators and optical frequency interval divider chains" OPTICS LETTERS, Bd. 23, Nr. 17, 1. September 1998 (1998-09-01), Seiten 1387-1389, XP002140877**
• **T.W.HÄNSCH: "Neue Wege zur Messung optischer Frequenzen" PHYSIKALISCHE BLÄTTER, Bd. 54, Nr. 11, November 1998 (1998-11), Seiten 1007-1011, XP002140878 in der Anmeldung erwähnt**

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft ein Verfahren zur Erzeugung ultrakurzer Laser-Lichtpulse, insbesondere ein Verfahren zur Stabilisierung des Betriebs eines Pulslasers und ein Verfahren zur Erzeugung hochgenauer optischer Frequenzen, und eine Lasereinrichtung zur Erzeugung ultrakurzer Lichtpulse, insbesondere einen frequenzstabilisierten Pulslaser, und Verwendungen einer derartigen Lasereinrichtung in der Spektroskopie, Zeit- oder Frequenzmeßtechnik und Kommunikationstechnik.

Die seit den 70-er Jahren bekannte Erzeugung ultrakurzer Laser-Lichtpulse (Lichtpulse mit charakteristischen Pulsdauern im ns- bis fs-Bereich) basiert auf der sog. Modensynchronisation. In einem Lasermedium können bei genügender Bandbreite des Laserübergangs im Resonator sehr viele Eigenschwingungen mit verschiedenen Frequenzen angeregt werden. Wird durch einen geeigneten Mechanismus zwischen den Eigenschwingungen eine feste Phasenbeziehung eingestellt (Modensynchronisation) so kommt es zur Abstrahlung kurzer Lichtpulse mit einem zeitlichen Abstand $\tau$, der gleich dem Quotienten aus doppelter Resonatorlänge und Umlaufgeschwindigkeit der Pulse ist, und einer spektralen Zusammensetzung entsprechend den im Resonator angeregten, zur Pulsbildung beitragenden optischen Frequenzen.

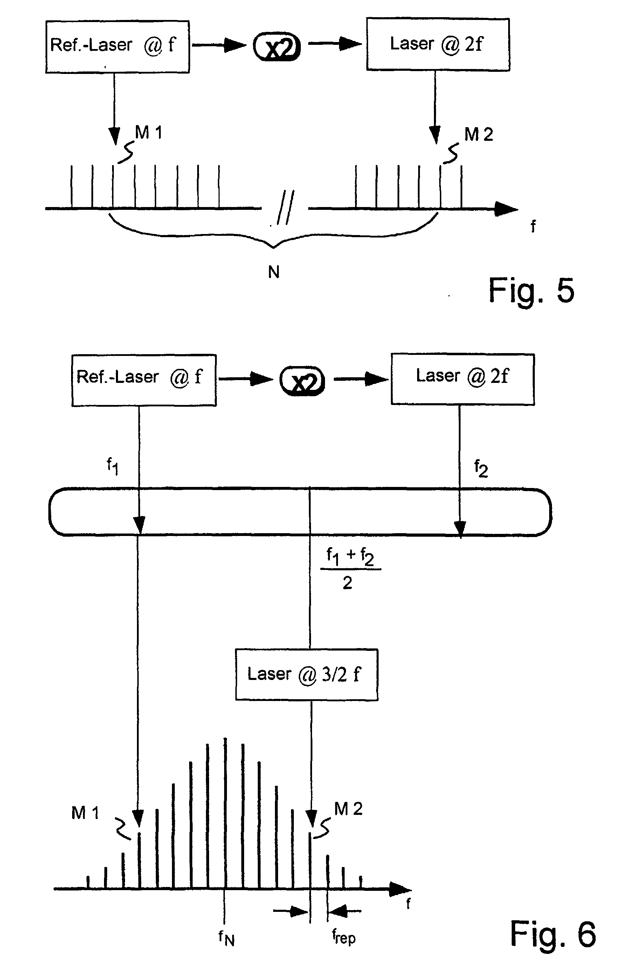

Bei Fourier-Transformation des Intensitätsverlaufs der pulsförmigen Laserstrahlung vom Zeit- in den Frequenzraum ergibt sich ein sogenannter Frequenzkamm, der durch $\delta$-ähnliche Funktionen bei den zu jedem Puls beitragenden optischen Frequenzen gebildet wird und dessen Einhüllende innerhalb der Bandbreite des Laserübergangs im Lasermedium liegt. Die Breite der Einhüllenden ist im wesentlichen umgekehrt proportional zur Pulsdauer. Ein Beispiel für einen derartigen Frequenzkamm ist in Fig. 5 schematisch gezeigt. Jeder Frequenzbeitrag zu einem derartigen Frequenzkamm wird hier als Mode M bezeichnet. Die Frequenzabstände der Elemente des Frequenzkammes sind entsprechend den (longitudinalen) Lasermoden ganzzahlige Vielfache der Pulswiederholfrequenz $f_r = \tau^{-1}$ (Repetitionsrate). Die Kammstruktur von fs-Pulsen im Frequenzraum wird beispielsweise in "Femtosecond Laser Pulses" (Hrsg. C. Rullière, Springer-Verlag, Berlin 1998) beschrieben.

Da die Pulswiederholfrequenz $f_r$ von der Resonatorlänge abhängt, treten bei geringsten Instabilitäten des Resonators Verschiebungen der idealerweise festen Modenabstände auf. Es sind Techniken zur Stabilisierung der Resonatorlänge bekannt, die eine Veränderung der Modenabstände unterdrücken. Hierzu wird beispielsweise ein Resonatorendspiegel in Resonatorlängsrichtung beweglich angeordnet und bei einer Modenverschiebung unter Verwendung eines Regelkreises nachgestellt. Diese herkömmliche Stabilisierung genügt jedoch nicht den aktuellen Genauigkeitsanforderungen bei Anwendungen in der Spektroskopie oder Zeitmeßtechnik.

Von J. N. Eckstein et al. (siehe "Physical Review Letters", Bd. 40, 1978, S. 847 ff.) wurde erkannt, daß sich die Aneinanderreihung der Moden als Skala für eine Frequenzkalibrierung eignen könnte. Gleichzeitig wurde aber auch auf die ungenügende Stabilität des Pulslasers und auf rauschbedingte Verschiebungen der Modenfrequenzen hingewiesen. Es wurde festgestellt, daß diese Verschiebungen trotz der Stabilisierung der Resonatorlänge weiter auftreten. Gemäß L. Xu et al. in "Optics Letters", Bd. 21, 1996, S. 2008 ff., wird dies dadurch verursacht, daß die Gruppengeschwindigkeit eines Pulses, die die Umlaufzeit im Resonator und damit die Wiederholfrequenz $f_r$ bestimmt, in der Regel nicht mit der Phasengeschwindigkeit der einzelnen Moden übereinstimmt. Die durch ganzzahlige Vielfache der Wiederholfrequenz $f_r$ getrennten Moden lassen sich in ihrer absoluten Frequenzlage nicht durch ganzzahlige Vielfache (n) der Wiederholfrequenz $f_r$ darstellen, sondern durch die Summe $(n \cdot f_r + f_p)$ aus $n \cdot$ Wiederholfrequenz $f_r$ und einer sogenannten Phasenschlupffrequenz $f_\mu$, die für alle Moden den gleichen Wert entsprechend dem Quotienten aus der jeweiligen Phasendifferenzen von Puls zu Puls durch die Umlaufzeit $(2\pi)\tau$ ist. Eine Bestimmung dieser Phasendifferenzen ist bisher nicht verfügbar, so daß die Anwendungen von Pulslasern für Meßzwecke oder als Generatoren optischer Frequenzen beschränkt sind.

Im folgenden werden zwei Aufgabenfelder beschrieben, in denen ein Interesse an hochgenauen optischen Frequenzen besteht. Die erste Anwendung bezieht sich allgemein auf die Frequenzmessung, insbesondere auf die Bereitstellung von Zeit- oder Frequenznormalen. Die zweite Anwendung liegt im Bereich der Spektroskopie, insbesondere in der Vermessung von atomaren elektronischen Energieübergängen.

Ein verbreitet verwendetes Zeitnormal ist durch die sogenannte Cäsium-Atomuhr mit einer Grundfrequenz von 9.2 GHz gegeben. Die Zeitmessung erfolgt durch direktes Auszählen der Grundschwingungen, was gegenwärtig mit einer Relativgenauigkeit von z.B. $10^{-14}$ möglich ist. Wesentlich höhere Relativgenauigkeiten bis zu Größenordnungen von $10^{-18}$ erwartet man von optischen Frequenznormalen z.B. auf der Basis von gekühlten Ionen in Feldkäfigen (siehe z.B. M. Roberts et al. in "Physical Review Letters", Bd. 78, 1997, S. 1876 ff.) oder von extrem schmalen atomaren Resonanzen wie dem 1S-2S-Übergang des Wasserstoffs (siehe z.B. T. Udem et al. in "Physical Review Leiters", Bd. 79, 1997, S. 2646 ff.). Diese Frequenznormale besitzen jedoch optische Frequenzen oberhalb von 80 THz, die nicht mehr direkt elektronisch ausgezählt werden können. Für eine optische Uhr benötigt man daher eine Einrichtung zur Frequenzumsetzung von der hohen Frequenz des Frequenznormals zu einer niedrigen Frequenz, die mit elektronischen Mitteln auswertbar ist. Eine derartige Einrichtung besitzt die Funktion eines "Uhrwerks" für eine "optische Uhr".

Zur Überbrückung des großen Frequenzabstands zwischen optischen Frequenzen und (elektronisch zählbaren) Radiofrequenzen werden harmonische Frequenzketten verwendet (siehe H. Schnatz et al. in "Physical Review Letters", Bd. 76, 1996, S. 18 ff.). Bei einer harmonischen Frequenzkette wird an einer Vielzahl von Vervielfacherstufen eine Bezugsfrequenz mit ganzzahligen Faktoren multipliziert, bis die angestrebte Frequenz erreicht ist. Dies erfordert jedoch für jede Vervielfacherstufe einen gesonderten Transfer-Oszillator mit einer Phasenkopplung an das vorangehende harmonische Signal. Die Bereitstellung einer Vielzahl von Oszillatoren bei verschiedenen Frequenzen macht den Aufbau umfangreich, kompliziert und teuer.

Fig. 13 illustriert ein weiteres Prinzip einer an sich bekannten Teilerstufe für optische Frequenzen (siehe T. W. Hänsch in "The Hydrogen Atom", Hrsg. G. F. Bassani et al., Springer-Verlag, Berlin 1989, S. 93 ff.; H. R. Telle et al. in "Optics Letters", Bd. 15, 1990, S. 532 ff.; und T. W. Hänsch in "Physikalische Blätter", Bd. 54, 1998, S. 1007 ff.). Überlagert man zwei Laserstrahlen, die sich in der Frequenz nur wenig unterscheiden, auf einem Photodetektor, dann beobachtet man eine Modulation der Lichtintensität bei der Differenzfrequenz (Schwebungssignal). Dieses Schwebungssignal kann verwendet werden, um die Frequenz einer der Teilstrahlen auf die Frequenz des anderen Teilstrahls einzuregeln. Bei dem Schema gemäß Fig. 13 werden zwei Laserfrequenzen $f_1$ und $f_2$ mit einer dritten Laserfrequenz $f_3$ nahe der Mittenfrequenz $(f_1 + f_2)/2$ verglichen. Mit einem nichtlinearen Kristall (+) wird die Summenfrequenz $f_1 + f_2$ und mit einem weiteren nichtlinearen Kristall (x2) die Oberschwingung $2f_3$ erzeugt. Das niederfrequente Schwingungssignal am Photodetektor wird in der digitalen Regelschleife $\Phi$ dazu ausgenutzt, die Frequenz und Phase des dritten Lasers so zu steuern, daß er präzise auf der mittleren Frequenz schwingt, d.h. $f_3 = (f_1 + f_2)/2$. Mit einer Kette von n Teilerstufen gemäß Fig. 13 läßt sich somit ein Frequenzintervall $\Delta f$ um einen Faktor $1/2^n$ reduzieren. Beginnt man eine solche Teilerstufenkette mit einer Laserfrequenz f und ihrer zweiten harmonischen Oberschwingung 2f, also mit $\Delta f = f$, dann erhält man nach n Teilerstufen eine Differenzfrequenz $f/2^n$. Das Problem der beschriebenen Teilerketten besteht nun darin, daß das für die Überbrückung einer Frequenzlücke von optischen Frequenzen $(f_{opt} > 300\ THz)$ zu Radiofrequenzen $(f_{radio} < 100\ GHz)$ mindestens zwölf Teilerstufen erforderlich sind. Dies stellt einen für Routineanwendungen unakzeptabel hohen Geräteaufwand dar.

Zur Verringerung der Anzahl der erforderlichen Teilerstufen ist vorgeschlagen worden, einen optischen Frequenzkammgenerator (OFC) zu verwenden (s. K. Imai et al. in "IEEE J. Quantum Electron.", Bd. 34, 1998, S. 54 ff.). Bei einem OFC werden mit einem für optische Frequenzen und Mikrowellenfrequenzen ausgelegten Resonator Seitenbänder auf einer optischen Trägerfrequenz erzeugt, die einen durch eine gegebene Mikrowellenfrequenz gelieferten Abstand besitzen. Für die genannte Frequenzlücke sind allerdings auch bei Verwendung eines OFC immer noch rd. fünf bis sechs Teilerstufen erforderlich. Einzelheiten eines OFC sind auch in der genannten Publikation von T. W. Hänsch in "Physikalische Blätter", 1998, erläutert.

Mit Blick auf die Schaffung eines "Uhrwerks" für optische Frequenznormale besteht ein Interesse an einem optischen Frequenzgenerator, mit dem insbesondere große Frequenzdifferenzen mit einer Relativgenauigkeit überbrückt werden, die deutlich besser als $10^{-14}$ ist und insbesondere eine Verringerung der Zahl der genannten Teilerstufen ermöglicht.

Die zweite Anwendung optischer Frequenzgeneratoren in der Spektroskopie betrifft die hochgenaue Frequenzmessung des Licht eines Spektroskopielasers. Die Absolutfrequenz z. B. der $D_1$-Resonanzlinie von Cäsium konnte bisher allerdings nur mit einer Relativgenauigkeit von rd. $10^{-7}$ gemessen werden (siehe K. H. Weber et al. in "Physical Review A", Bd. 35, 1987, S. 4650). Es besteht ein Interesse an der Erhöhung der Genauigkeit bei der Frequenzmessung elektronischer Zustände.

Es ist die Aufgabe der Erfindung, ein neuartiges Verfahren zum Betrieb eines Pulslasers mit definierten Pulsparametern, insbesondere mit einer definierten Modenlage anzugeben, das eine erhebliche Erhöhung der Genauigkeit bei der Erzeugung oder Messung optischer Frequenzen und/oder optischer Differenzfrequenzen ermöglicht. Mit diesem Verfahren soll insbesondere die Möglichkeit einer Stabilisierung des Betriebs eines Pulslasers geschaffen werden, die als einfache, zuverlässige, schnell ansprechende und genaue Regelung realisierbar ist. Es ist auch eine Aufgabe der Erfindung, ein Verfahren zur Erzeugung oder Messung optischer Frequenzen und/oder optischer Differenzfrequenzen anzugeben. Die Aufgabe der Erfindung besteht auch darin, eine Vorrichtung zur Implementierung der Verfahren anzugeben. Ferner sollen mit der Erfindung neue Verwendungen optischer Frequenzgeneratoren angegeben werden.

Diese Aufgaben werden mit Verfahren und Vorrichtungen mit den Merkmalen gemäß den Patentansprüchen 1, 14, 15 bzw. 16 gelöst. Vorteilhafte Ausführungsformen und Verwendungen der Erfindung ergeben sich aus den abhängigen Ansprüchen.

Gemäß einem ersten Gesichtspunkt der Erfindung wird ein Verfahren zum Betrieb eines Pulslasers angegeben, bei dem in einer Resonatoranordnung umlaufende Lichtpulse erzeugt werden, wobei eine vorbestimmte Einstellung verschiedener Phasenverschiebungen für verschiedene spektrale Komponenten der Lichtpulse erfolgt. Durch Einführung einer linearen Dispersion (Dispersion erster Ordnung) erhält mindestens eine Mode eine bestimmte Frequenz und/oder der Modenabstand zwischen den Moden wird auf einen bestimmten Wert eingestellt. Es kann insbesondere vorgesehen sein, daß jede Mode einer spektral spezifischen Frequenzänderung unterzogen wird. Die Einstellung spektral verschieden wirksamer Resonatorlängen kann durch verschiedene Maßnahmen zur Einführung einer linearen Dispersion in den Resonator erfolgen. Zu diesen zählen eine geometrische, spektral spezifische Resonatorlängeneinstellung in einem Resonatorteil, in dem die Pulse spektral räumlich getrennt umlaufen, eine Einführung von Material mit einer linearen Dispersion in die Resonatoranordnung und/oder Maßnahmen zur Einstellung der Pumpleistung am Lasermedium. Der Resonatorteil, in dem die Pulse spektral räumlich getrennt umlaufen, befindet sich auf der vom Lasermedium des Pulslasers abgewandten Seite einer Einrichtung zur Kompensation der Gruppengeschwindigkeitsdispersion (Pulskompressor). Die Einführung einer linearen Dispersion ist von der Kompensation oder Einstellung einer Gruppengeschwindigkeitsdispersion (Dispersion zweiter Ordnung)zu unterscheiden, die bei der Pulserzeugung erforderlich ist.

Gemäß einer besonderen Ausführungsform wird das erfindungsgemäße Verfahren als Regelverfahren zur Stabilisierung des Betriebs eines Pulslasers ausgeführt, bei dem in Abhängigkeit von einer Frequenzabweichung mindestens einer ersten Bezugsmode der Lichtpulse von einer Referenzfrequenz die Phasenumlaufzeit der Lichtpulse variiert wird. Der Pulslaser wird mit einem Moden-Regelkreis in Bezug auf die Referenzfrequenz und einem Wiederholfrequenz-Regelkreis in Bezug auf ein Frequenznormal stabilisiert. Die Regelkreise wirken zur Einstellung der Pulswiederholfrequenz $f_r$ und der Modenlage zusammen.

Der Pulslaser besitzt eine Dispersions-Stelleinrichtung zur Einstellung der linearen Dispersion im Resonator und eine Resonatorlängen-Stelleinrichtung zur Einstellung der Resonatorlänge. Aufgrund der unten im einzelnen erläuterten Zusammenwirkung der beiden Regelkreise ist vorgesehen, daß entweder im Moden-Regelkreis die Dispersions-Stelleinrichtung und im Wiederholfrequenz-Regelkreis die Resonatorlängen-Stelleinrichtung oder umgekehrt im Moden-Regelkreis die Resonatorlängen-Stelleinrichtung und im Wiederholfrequenz-Regelkreis die Dispersions-Stelleinrichtung geregelt werden.

Diese Regelkreise können gemäß einer Weiterbildung der Erfindung mit einem Referenzlaser-Regelkreis zusammenwirken, mit dem die Referenzfrequenz in Bezug auf eine zweite Bezugsmode des Frequenzkammes stabilisiert wird.

Gemäß einer weiteren Ausführungsform wird das erfindungsgemäße Verfahren als Regelverfahren zum Betrieb eines Referenzlasers mit einer stabilisierten Referenzfrequenz ausgeführt. Der Referenzlaser wird in Abhängigkeit von einer Frequenzabweichung der Referenzfrequenz (oder ganzzahligen Teilern oder Vielfachen von dieser) von mindestens einer Bezugsmode der im Pulslaser umlaufenden Lichtpulse, der in Bezug auf ein Frequenznormal stabilisiert ist, geregelt. Das Gesamtsystem mit dem Referenzlaser bildet einen erfindungsgemäßen optischen Frequenz-Synthesizer.

Gemäß einem zweiten Gesichtspunkt der Erfindung wird eine Lasereinrichtung zur Erzeugung kurzer Lichtpulse angegeben, bei der eine Resonatoranordnung mit einem aktiven Medium, einer Vielzahl von Resonatorspiegeln und einer Kompensationseinrichtung zur Kompensation der Gruppengeschwindigkeitsdispersion der Lichtpulse vorgesehen ist, wobei die Resonatoranordnung mindestens eine regelbare Dispersions-Stelleinrichtung zur Einstellung der Phasenumlaufzeit der Lichtpulse entsprechend einer der o. a. Maßnahmen aufweist. Die Einstellung der Phasenumlaufzeit erfolgt vorzugsweise als Regelung simultan zur Regelung der Wiederholfrequenz unter Verwendung der Moden- und Wiederholfrequenz-Regelkreise.

Die Dispersions-Stelleinrichtung wird vorzugsweise in einem Resonatorzweig auf der vom aktiven Medium abgewandten Seite der Kompensationseinrichtung z.B. in Form einer Kippeinrichtung an einem Resonatorendspiegel realisiert. Alternativ kann die Dispersions-Stelleinrichtung als kippbare transparente Platte oder einschiebbares Prismenpaar oder auch als Einrichtung zur Variation der Pumpleistung für das Lasermedium ausgebildet sein.

Gemäß einem weiteren wichtigen Gesichtspunkt der Erfindung wird mit einer erfindungsgemäß stabilisierten Pulslasereinrichtung ein breiter Frequenzkamm erzeugt, der im niederfrequenten Bereich die erste Bezugsmode enthält und bei dem im höherfrequenten Bereich die zweite Bezugsmode im Rahmen eines (dritten) Referenzlaser-Regelkreises zur Einstellung der Referenzfrequenz des Moden-Regelkreises verwendet wird.

Gemäß einem weiteren wichtigen Gesichtspunkt der Erfindung wird eine Lasereinrichtung unter Verwendung eines Frequenznormals, vorzugsweise einer Radiofrequenzreferenzquelle, derart stabilisiert, daß die Lasereinrichtung und/oder ein mit dieser gekoppelter Referenzlaser einen Generator optischer Frequenzen (optischer Frequenz-Synthesizer) für Präzisionsanwendungen in der Zeit- oder Frequenzmeßtechnik und Spektroskopie darstellt.

Vorteile und Einzelheiten der Erfindung werden im folgenden unter Bezug auf die beigefügten Figuren beschrieben. Es zeigen:

Fig. 1          eine schematische Übersichtsdarstellung einer erfindungsgemäßen Lasereinrichtung;

Fign. 2 - 4       Illustrationen von Ausführungsformen einer erfindungsgemäß stabilisierten Lasereinrichtung;

Fign. 5 - 8       Illustrationen zur Phasenkopplung bei der erfindungsgemäßen Stabilisierung einer Lasereinrichtung;

Fign. 9 - 11     Illustrationen zur Anwendung der Erfindung bei spektroskopischen Messungen oder Zeitmessungen;

Fig. 12        eine weitere Ausführungsform einer erfindungsgemäß stabilisierten Lasereinrichtung; und

Fig. 13        eine optische Frequenz-Teilerstufe (Stand der Technik).

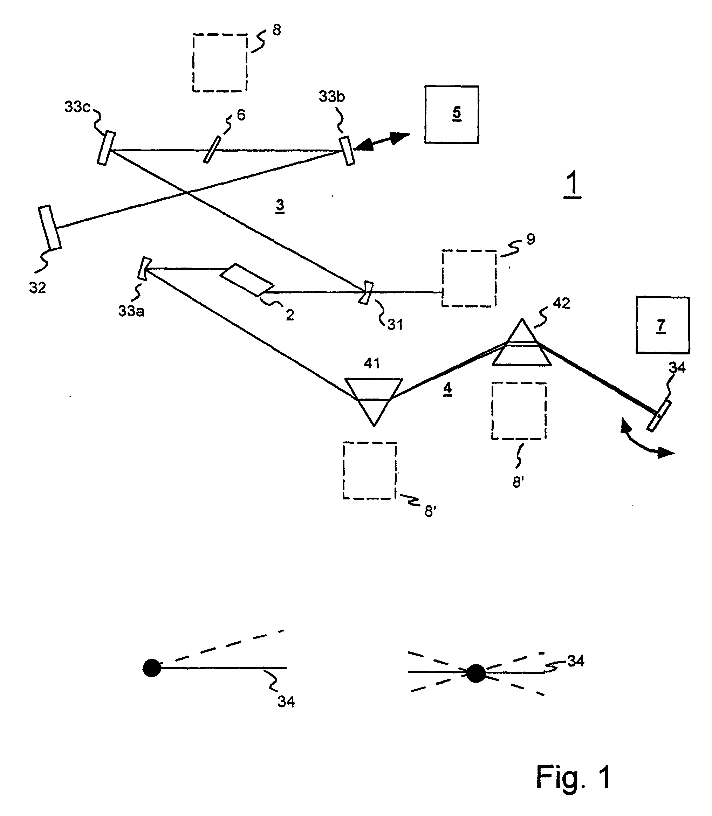

Obwohl der Betrieb eines stabilisierten Pulslasers unter Verwendung verschiedener stabilisierender Regelmechanismen eine bevorzugte Ausführungsform der Erfindung darstellt, wird die obengenannte Aufgabe bereits durch eine Lasereinrichtung mit einer Resonatoranordnung gelöst, bei der für die verschiedenen spektralen Komponenten der umlaufenden Pulse verschiedene, vorbestimmte Phasenverschiebungen wirksam sind. Eine derartige Lasereinrichtung wird zunächst unter Bezug auf Fig. 1 erläutert. Anschließend werden die Einführung der Stabilisierungsregelung illustriert und Anwendungen der Erfindung beschrieben.

### Lasereinrichtung mit spektral spezifisch verstellbaren Phasenverschiebungen

Fig. 1 zeigt schematisch eine Ausführungsform einer erfindungsgemäßen Lasereinrichtung 1 mit einem aktiven Lasermedium 2 in einer Resonatoranordnung 3, die einen Einkoppelspiegel 31, einen Auskoppelspiegel 32, eine Vielzahl von Umlenkspiegeln 33a, 33b, 33c und einen ebenen Endspiegel 34 umfaßt. Das aktive Lasermedium 2 ist ein $Ti:Al_2O_3$-Kristall (mit einer Kerr-Linse modengekoppelt, z. B. der kommerziell verfügbare "Coherent Mira 900", Pulslänge 73 fs, Wiederholfrequenz $f_r$ = 75 MHz), der durch den Einkoppelspiegel 31 mit einem diodengepumpten, frequenzverdoppelten Einzelfrequenz-$Nd:YVO_4$-Laser (z. B. "Coherent Verdi", nach Frequenzverdopplung: $\lambda$ = 532 nm, Leistung 5 W) gepumpt wird. Im Resonator 3 befindet sich ferner zwischen dem Umlenkspiegel 33a und dem Endspiegel 34 eine Kompensationseinrichtung 4 zur Kompensation der Gruppengeschwindigkeitsdispersion der umlaufenden Lichtpulse (Pulskompressor). Beim dargestellten Beispiel umfaßt die Kompensationseinrichtung 4 zwei Prismen 41, 42, deren Position in Bezug auf den Strahlengang in der Resonatoranordnung in an sich bekannter Weise eingestellt ist. Die Funktion der Prismen 41, 42 könnte auch durch andere spektral wirksame Elemente wie beispielsweise gechirpte Resonatorspiegel übernommen werden (siehe auch "Femtosecond Laser Pulses" von C. Rullière).

Anwendungsabhängig wird ein Laser mit einer höheren Wiederholfrequenz $f_r$ (z. B. rd. 1 GHz oder darüber) eingesetzt. Höhere Wiederholfrequenzen ergeben größere Modenabstände und damit leichter identifizierbare und der unten erläuterten Schwebungsmessung besser zugängliche Moden.

Die Resonatorlänge kann durch Verschiebung des Umlenkspiegels 33b entsprechend dessen Spiegelnormalen (Pfeilrichtung) eingestellt werden. Hierzu ist der Umlenkspiegel 33b mit einem als Resonatorlängen-Stelleinrichtung wirkenden Schubantrieb 5 versehen. Der Schubantrieb 5 ist beispielsweise ein in an sich bekannter Weise gesteuerter Piezoantrieb. Das Bezugszeichen 6 bezeichnet einen doppelt brechenden Filter (Lyot-Filter).

Die Resonatoranordnung 3 ist, soweit sie bis hier beschrieben wurde, an sich bekannt und entsprechend den üblichen Maßnahmen zur Pulsformung, Pulsmessung und dergleichen modifizierbar. Die erfindungsgemäße Resonatoranordnung 3 unterscheidet sich jedoch von herkömmlichen Resonatoren durch die Einführung einer Stelleinrichtung zur Einstellung und/oder Änderung der linearen Dispersion im Resonator. Diese Stelleinrichtung, die in Bezug auf die unten erläuterten Regelkreise auch als Dispersions-Stelleinrichtung bezeichnet wird, kann durch verschiedene Maßnahmen implementiert werden, für die beispielhaft in Fig. 1 die Kipp- oder Schwenkbarkeit des Endspiegels 34 illustriert ist. Durch die Einführung der Dispersions-Stelleinrichtung können bei Zusammenwirken mit dem Schubantrieb 5 zur Verstellung des Umlenkspiegels 33b sowohl die Wiederholfrequenz $f_r$ als auch die Modenfrequenzen durch Steuerung der Gruppen- und Phasenumlaufzeiten der im Resonator umlaufenden, solitonenähnlichen Pulse festgelegt werden.

Der schwenkbare Endspiegel 34 ist im Resonatorzweig auf der vom aktiven Medium abgewandten Seite der Kompensationseinrichtung 4 vorgesehen. Die Verschwenkbarkeit bedeutet, daß der Endspiegel 34 um eine Achse verschwenkbar ist, die auf der Bezugsebene senkrecht steht, in der die spektrale Pulsaufspaltung in der Kompensationseinrichtung 4 erfolgt. Im unteren Teil von Fig. 1 sind zwei vergrößerte Darstellungen des verschwenkbaren Endspiegels 34 gezeigt. Der Endspiegel 34 wird mit einer schematisch dargestellten Schwenkeinrichtung 7 betätigt, die z.B. einen Piezoantrieb umfaßt. Bei Einstellung einer bestimmten Ausrichtung des Endspiegels 34 wird die folgende Wirkung erzielt.

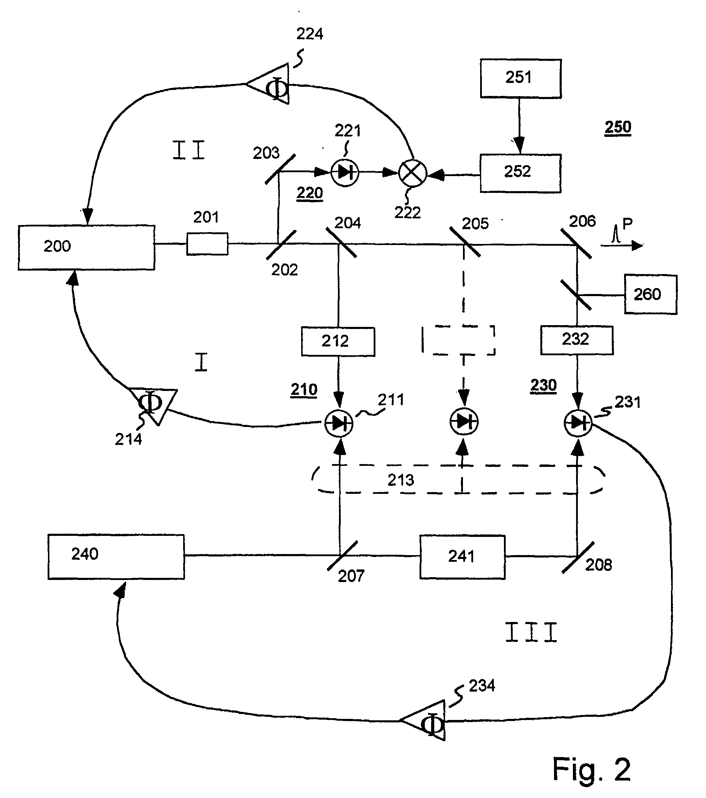

Auf der vom aktiven Lasermedium 2 abgewandten Seite der Kompensationseinrichtung 4 sind die Pulse spektral räumlich aufgelöst. Die Moden laufen nebeneinander. Eine Mode trifft auf den Spiegel 34 gerade bei der Schwenkachse der Schwenkeinrichtung (oder am nächsten zu dieser Schwenkachse). Diese Mode wird beim Verschwenken des Spiegels 34 nicht (oder kaum) verändert. Alle anderen Moden besitzen einen räumlichen Abstand von dieser Mode und werden durch das Verschwenken mit zunehmendem Schwenkwinkel auseinandergezogen. Die Modenabstände ändern sich und damit auch die Wiederholfrequenz $f_r$ der Lichtpulse. Durch Verschwenken des Endspiegels wird somit geometrisch eine Phasenverschiebung eingeführt, die proportional zum Frequenzabstand von zwei Moden ist und einer Änderung der linearen Dispersion entspricht. Die Phasenverschiebung liefert eine zeitliche Verschiebung des Pulses und ändert damit die wirksame Resonator-Umlaufzeit. Dadurch wird im Unterschied zur Gruppengeschwindigkeitsdispersion (Dispersion zweiter Ordnung), die die Pulse spektral zerfließen läßt, die Gruppenumlaufzeit verändert. Dies führt zu einer Einstellung (bzw. bei einer Regelung gemäß den Fign. 2 - 4 zu einer Festlegung) der Lage der Modenfrequenzen.

Der verschwenkbare Endspiegel 34 wird mit einer Schwenkachse am Spiegelrand (Fig. 1, links unten) oder in der Spiegelmitte (Fig. 1, rechts unten) auf einer Kugel gelagert. Die Lagerung in der Spiegelmitte wird, da sich beim Schwenken keine Änderung der mittleren Resonatorlänge ergibt, und aus Gründen einer vereinfachten Justierung bevorzugt. Bei Lagerung am Spiegelrand ist ggf. eine Nachjustierung der Resonatorlänge am Umlenkspiegel 33b vorgesehen. Der Schwenkwinkel wird anwendungsabhängig im Bereich von 0.005° bis 0.05° verschwenkt. Dies entspricht z.B. bei einer Spiegelbreite von rd. 2 cm einem Verschwenken des freien Spiegelrandes um rd. 5 μm. Das Verschwenken mit der Schwenkeinrichtung 7 erfolgt stufenlos.

Gemäß einer alternativen Gestaltungsform der ersten Stelleinrichtung ist der Endspiegel 34 fest angebracht. Zur optischen Einführung der linearen Dispersion in den Resonator ist dann in einem beliebigen Resonatorteil ein einschiebbares, transparentes Prismenpaar oder eine verschwenkbare, transparente Platte mit einer Schub- oder Schwenkeinrichtung 8', 8 (gepunktet dargestellt) vorgesehen. Das Prismenpaar besitzt vorzugsweise einen Öffnungswinkel entsprechend dem Brewsterwinkel im betrachteten Wellenlängenbereich (z. B. rd. 69°). Die Platte besitzt z. B. eine Dicke von 2 mm. Die Funktion des Prismenpaares oder der Platte, die beispielsweise aus Glas bestehen, entspricht der oben erläuterten Funktion des verschwenkbaren Endspiegels 34, wobei jedoch wegen des zusätzlichen transparenten Mediums eine zusätzliche Nachregelung der optischen Resonatorlänge erforderlich ist. Beim Verschieben des Prismenpaares (Größenordnung μm) oder Verkippen der Platte (Größenordnung um) verläuft ein längerer oder kürzerer Lichtweg durch das Glas (z.B. Kronglas SF10, Quarzglas), so daß die lineare Dispersion entsprechend verändert wird. Die Platte kann durch den Lyot-Filter 6 gebildet werden. Entsprechend kann das Prismenpaar auch durch die Prismen 41, 42 der Kompensationseinrichtung gebildet werden. Die Platte kann zur Vermeidung von Interferenzerscheinungen mit einem Keilwinkel ausgebildet sein.

Es wird betont, daß die Schubeinrichtung 8' nicht mit den bekannten Schubschlitten herkömmlicher Pulskompressoren zu verwechseln ist. Die Schubeinrichtung 8' (z.B. mit Piezoantrieb) ist für Verstellwege im μm-Bereich eingerichtet, während die Schubschlitten im mm-Bereich zu verstellen sind.

Eine weitere Möglichkeit zur Einstellung der linearen Dispersion im Resonator ist durch eine vorbestimmte Einstellung der Pumpleistung für das aktive Lasermedium 2 gegeben. Das Pumplicht wird außerhalb des Resonators (noch vor dem Einkoppelspiegel 31) z.B. mit einem elektro-optischen Intensitätsmodulator 9 (gepunktet dargestellt) moduliert. Dadurch wird insbesondere die lineare Dispersion im aktiven Medium 2 geändert. Zur Variation der Pumpleistung genügen Modulationen im %-Bereich. Weiter mögliche lineare Dispersionsänderungen werden unten unter Bezug auf einen Ringlaser erläutert.

Der Aufbau der Lasereinrichtung gemäß Fig. 1 kann in Bezug auf die Wahl des aktiven Lasermediums und der Laserparameter (insbesondere Pulsdauer, Leistung, spektrale Zusammensetzung der Pulse) modifiziert sein. Die Lasereinrichtung 1 kann mit einer nach dem Auskoppelspiegel 32 vorgesehenen optischen Faser 201 (s. Fig. 2) kombiniert sein, deren Funktion unten erläutert wird. Es ist auch möglich, sowohl die Schubeinrichtung 5 als auch die Schwenkeinrichtung 7 am Endspiegel 34 vorzusehen, so daß an diesem sowohl die spektral unabhängige Einstellung der Resonatorlänge als auch die Beeinflussung der linearen Dispersion im Resonator erfolgt.

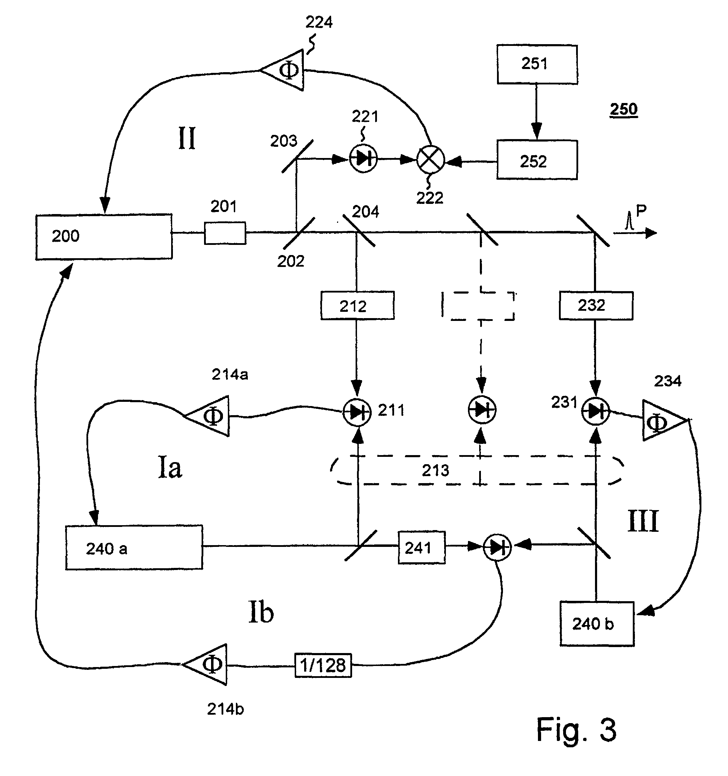

Anstelle des Aufbaus gemäß Fig. 1 kann auch ein Ringlaser mit der erfindungsgemäßen Stabilisierung betrieben werden. Ein Ringlaser ist allgemein eine Lasereinrichtung mit einem Ringresonator, der mindestens 3 Spiegel umfaßt, zwischen denen Laserpulse, ggf. mit sich kreuzenden Lichtwegen, umlaufen. Desweiteren enthält der Ringlaser das Lasermedium und ggf. weitere optische Komponenten. Es sind beispielsweise 4 Spiegel vorgesehen, wie es im o. a. Buch von C. Rullière (S. 60, Fig. 3.5) allgemein gezeigt ist. Dieser Aufbau wird hiermit ausdrücklich in die vorliegende Offenbarung einbezogen.

In einem Ringlaser wird die Gruppengeschwindigkeit nicht mit einem Prismenpaar, sondern mit mindestens einem gechirpten Endspiegel kompensiert. Die erfindungsgemäße modenspezifische Frequenzänderung wird mittels einer der folgenden Maßnahmen eingeführt. Erstens kann eine direkte Intensitätsmodulation am Pumplaser vorgesehen sein. Die Intensitätsmodulation wird in Abhängigkeit von Signalen aus den unten erläuterten Regelkreisen eingestellt und beträgt beispielsweise rd. 5%. Zweitens kann eine Änderung der geometrischen Beziehung zwischen dem Pumpstrahl und dem Pulslasermedium vorgesehen sein. Durch ein Verkippen des Pumpstrahls und/oder des Pulslasermediums relativ zueinander wird wiederum eine Modulation der effektiv wirksamen Intensität des Pumpstrahls bewirkt. Das Verkippen wird mit Stelleinrichtungen am Pumplaser und/oder Pulslaser in Abhängigkeit von den Regelkreissignalen eingestellt und beträgt z. B. rd. 0.05°. Alternativ kann auch ein gegenseitiges Verschieben vorgesehen sein. Durch das Verschieben des Pumpstrahls im Pulslasermedium (im Titan-Saphir-Laser um z. B. rd. 50 μm) wird der Ort der Anregung im Pulslasermedium und damit die effektiv wirksame Intensität des Pumpstrahls variiert.

Der Aufbau eines stabilisierten Ringlasers besitzt den Vorteil einer hohen Platzersparnis. Der Ringlaser kann so kompakt aufgebaut sein, daß die Gesamtanordnung auf eine Grundfläche von rd. $20 \cdot 30$ cm$^2$ (oder kleiner) paßt.

Lasereinrichtung mit geregelter Stabilisierung

Die in Fig. 1 illustrierte Lasereinrichtung wird erfindungsgemäß bevorzugt unter Implementierung mindestens drei Regelkreisen betrieben, die im folgenden unter Bezug auf die Fign. 2 - 4 und 12 erläutert werden. Die Stabilisierung eines Pulslasers ist jedoch nicht auf die Lasereinrichtung 1 gemäß Fig. 1 beschränkt, sondern in entsprechender Weise mit anderen Typen von Lasern zur Erzeugung ultrakurzer Lichtpulse (z.B. Faserlaser, Farbzentrenlaser, Gaslaser, Farbstofflaser) realisierbar. Die Kombination mit einem kompakten Femtosekundenlaser (Faserlaser, Titan-Saphir-Laser) wird jedoch wegen der Stabilität und Kompaktheit für praktische Anwendungen bevorzugt.

Fig. 2 illustriert schematisch den Aufbau von drei Regelkreisen, nämlich dem Moden-Regelkreis I, dem Wiederholfrequenz-Regelkreis II und dem Referenzlaser-Regelkreis III, an einem ersten Ausführungsbeispiel. Bei einer stabilisierten, geregelten Lasereinrichtung werden vorzugsweise alle drei Regelkreise realisiert, ein Betrieb allein mit den Regelkreisen I und II ist jedoch, insbesondere bei Bereitstellung eines genügend stabilen Referenzlasers, auch möglich, dies ggf. sogar unter Kombination beider Regelkreise I und II mit einem einzigen Regelungsmechanismus.

Die Lichtpulse einer Lasereinrichtung 200 (modensynchronisierter Pulslaser) werden durch eine optische Faser 201 von den Spiegeln 202 und 203 zu den signalgebenden Elementen 220 des Wiederholfrequenz-Regelkreises II und vom Spiegel 204 zu den signalgebenden Elementen 210 des Moden-Regelkreises I gelenkt. Die in den Fig. 2 - 4 gezeigten Umlenkspiegel sind anwendungsabhängig ausgewählte teildurchlässige und/oder dichroitische Spiegel und werden im folgenden sämtlich kurz als Spiegel bezeichnet. Die am Spiegel 204 durchtretenden Pulse werden am Spiegel 206 teilweise auf die signalgebenden Elemente 230 des Referenzlaser-Regelkreises III gelenkt bzw. als Ausgangslichtpulse P durchgelassen.

In Abhängigkeit von der jeweiligen Anwendung wird aus einem Teil des Lichtwegs im dargestellten Schema Licht zum weiteren Einsatz ausgekoppelt. Diese Auskopplung erfolgt z.B. wie dargestellt am Spiegel 206 oder zwischen dem Referenzlaser 240 für optische Frequenzen und dem Spiegel 207.

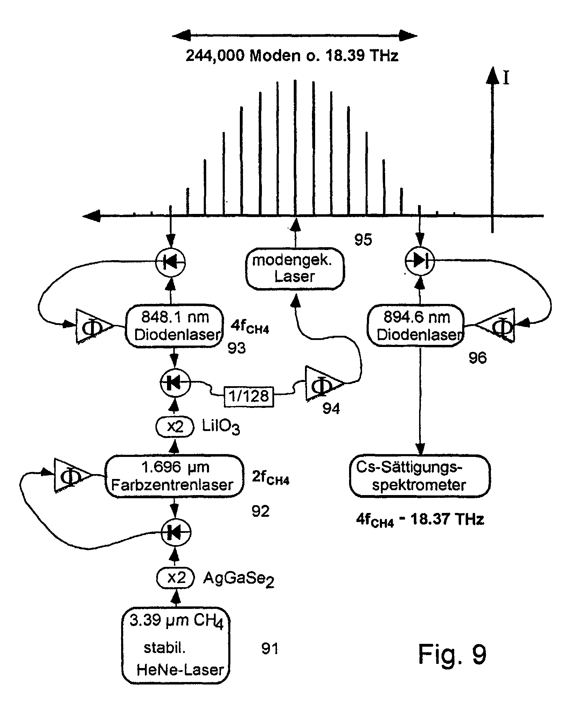

Der Referenzlaser 240 wird allgemein auch als optischer Referenzfrequenzgenerator 240 bezeichnet. Es ist vorzugsweise ein schmalbandiger Dauerstrichlaser vorgesehen, dessen optische Frequenz mit ausreichender Genauigkeit bekannt oder der mit dem Referenzlaser-Regelkreis III stabilisiert ist. Falls der Regelkreis III nicht implementiert wird, so umfaßt der Referenzlaser 240 beispielsweise einen methan-stabilisierten Helium-Neon-Laser. Beim dargestellten Beispiel besitzt die erste Bezugsmode eine Frequenz von rd. 350 THz und der Helium-Neon-Laser eine Frequenz von rd. 88 THz, so daß zwei nicht dargestellte Vervielfacherstufen zur Frequenzanpassung (gesamt: Faktor 4, siehe Bezugszeichen 92, 93 in Fig. 9) vorgesehen sind. Fig. 2 zeigt ferner einen Referenzfrequenzgenerator 250 für Radiofrequenzen. Dieser umfaßt beispielsweise eine Cäsium-Atomuhr 251 mit einer charakteristischen Frequenz von 9.2 GHz und einen Frequenzsynthesizer 252 zur Bereitstellung von gegenüber der Atomuhr abgeleiteten Bezugsfrequenzen.

Die in Fig. 2 gezeigten Elemente wirken zur Stabilisierung der Lasereinrichtung 200 wie folgt zusammen. Im Moden-Regelkreis I werden die über den Spiegel 204 auf die Elemente 210 gelenkten Ausgangspulse der Lasereinrichtung 200 auf das lichtempfindliche Element 211 gerichtet. Des weiteren wird Licht mit einer Referenzfrequenz $f_{ref}$ auf das Element 211 gerichtet. Die Referenzfrequenz $f_{ref}$ ist die Ausgangsfrequenz des Referenzlasers 240 (oder ein ganzzahliges Vielfaches und/oder ein Teiler davon) oder eine mit einer SHG-Einrichtung 241' frequenzverdoppelte Mode des ursprünglichen Modenkammes (siehe unten). Die Referenzfrequenz wird über den Spiegel 207 ebenfalls auf das lichtempfindliche Element 211 gerichtet. Das lichtempfindliche Element 211 ist dazu vorgesehen, insbesondere eine Schwebungsfrequenz zwischen einer Bezugsmode der Ausgangspulse und der Referenzfrequenz zu erfassen. Hierzu werden beide Anteile in an sich bekannter Weise unter Verwendung von Polarisations-Teilern überlagert. Das lichtempfindliche Element 211 ist, insbesondere in Abhängigkeit vom jeweiligen Spektralbereich, eine Photodiode oder ein Photomultiplier.

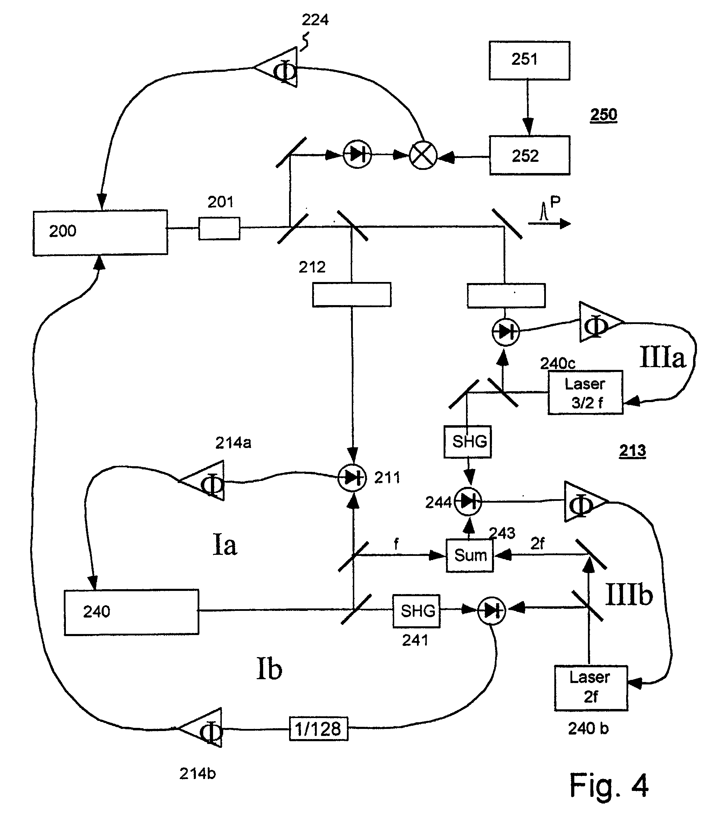

Das elektrische Ausgangssignal des lichtempfindlichen Elements 211 enthält das charakteristische Schwebungssignal, das durch die Überlagerung der optischen Frequenz der ausgewählten Bezugsmode innerhalb des Frequenzkamms der Ausgangspulse der Lasereinrichtung 200 und der genannten Referenzfrequenz gebildet wird. Das Schwebungssignal wird als Regelgröße an den (Moden-)Regler 214 gegeben, der ein Ausgangssignal zur Betätigung der Dispersions-Stelleinrichtung der Lasereinrichtung 200 abgibt, die eine Schwenkeinrichtung 7 (oder der Einrichtungen 8, 8', s. Fig. 1) ist. Das Ausgangssignal kann alternativ auch zur Regelung des Referenzlasers (siehe Fign. 3 und 4) oder zur Einstellung der Schubeinrichtung 5 (s. Fig. 1) verwendet werden. Der Regler 214 ist in an sich bekannter Weise als analoger oder digitaler Regler aufgebaut. Der Moden-Regelkreis I bildet einen PLL-Regelkreis.

Zur Erzielung eines für die Regelung optimalen Schwebungssignals wird einerseits eine geeignete (Bezugs-)Mode des Frequenzkamms der Ausgangspulse ausgewählt. Hierzu kann anwendungsabhängig ein frequenzselektives Element 212 (z.B. ein optisches Gitter) vorgesehen sein, um eine bestimmte spektrale Komponente der Ausgangspulse auf das lichtempfindliche Element 211 zu lenken. Dies dient jedoch nur der Verbesserung des Signal-Rausch-Verhältnisses und ist nicht zwingend erforderlich. Andererseits wird ggf. die Ausgangsfrequenz des Referenzlasers 240 nicht selbst als Referenzfrequenz verwendet, sondern zusätzlich auf die zur Verfügung stehende Mode abgestimmt.

Diese Abstimmung umfaßt, insbesondere in Zusammenhang mit der unten erläuterten Referenzlaser-Regelung, eine Vervielfachung und/oder eine Teilung der Ausgangsfrequenz zur Erzielung der Referenzfrequenz $f_{ref}$. Die Vervielfachung ergibt eine Referenzfrequenz $f_{ref}$ im Bereich des Frequenzkammes. Die Referenzlaser-Regelung koppelt ein Vielfaches (z.B. Doppeltes) der Ausgangsfrequenz des Referenzlasers 240 an eine weitere Bezugsmode des Frequenzkammes mit Abstand (z.B. Abstand $f_{ref}$) von der ersten Bezugsmode. Die Teilung ist ggf. erforderlich, falls der Frequenzkamm nicht genügend breit ist und keine verwertbare Bezugsmode bei $2f_{ref}$ aufweist. Die Teilung erfolgt mit der Teilerstufe 213, die grundsätzlich wie die Teilerstufe gemäß Fig. 13 aufgebaut ist.

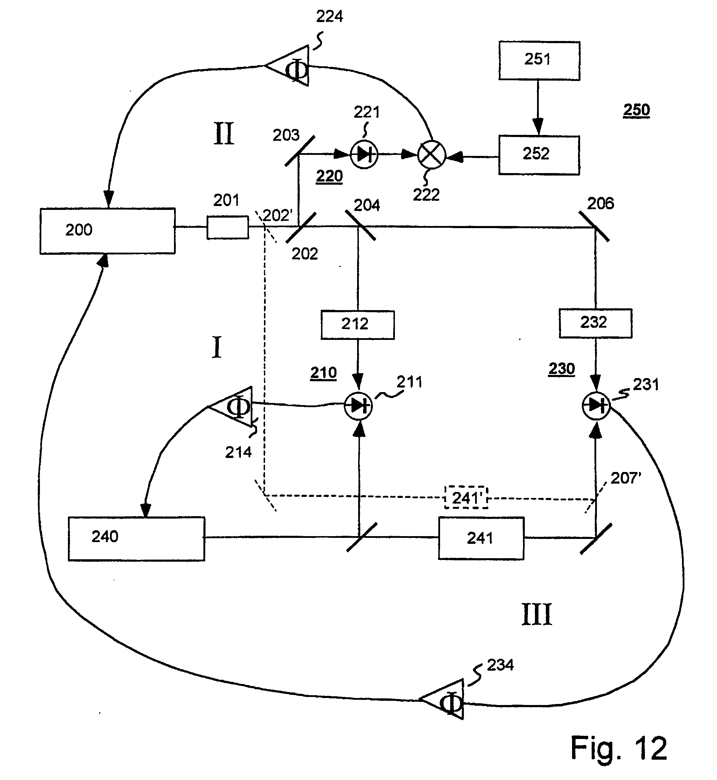

Wenn der am Ausgang der Faser 201 emittierte Modenkamm genügend breit ist und insbesondere eine ganze Frequenzoktave (f und 2f) oder mehr umfaßt, so kann als Referenzfrequenz $f_{ref}$ die frequenzvervielfachte Mode des Modenkammes verwendet werden. Diese Abwandlung ist in Figur 12 mit den Elementen 202', 207' und 241' gestrichelt eingezeichnet. Das Element 202' ist ein dichroitischer Spiegel, der niedrige Frequenzen des Modenkammes ablenkt und hohe Frequenzen durchläßt. Eine oder mehrere Moden des Frequenzkammes werden mit der SHG-Einrichtung 241' (z.B. KDP- oder $KNbO_3$-Kristall) frequenzverdoppelt. Die Anzahl der frequenzverdoppelten Moden hängt von den Parametern der SHG-Einrichtung ab. Wenn die Phasenanpassung in der SHG-Einrichtung z. B. über 2 bis 3 nm wirksam ist, so können bis zu 1000 Moden frequenzverdoppelt werden. Dementsprechend können bei der Schwebungsmessung am lichtempfindlichen Element 231 auch eine Vielzahl von höherfrequenten Moden des Modenkammes berücksichtigt werden. Es ergibt sich vorteilhafterweise ein erheblicher Intensitätsgewinn bei der Schwebungsmessung und damit eine Genauigkeitserhöhung im Regelkreis I.

Die Verwendung einer niederfrequenten Mode als Referenz für die Schwebungsmessung basiert auf den folgenden Überlegungen. Die niederfrequente Mode (z. B. $f_N$) unterscheidet sich bei einem Modenabstand $f_r$ und von der m-ten höherfrequenten Mode $f_Z$ durch $mf_r$. Es wird ein m gewählt, für das gelten soll: $f_Z = f_N + mf_r = 2f_N + \Delta$. Für die Schwebungsfrequenz ergibt sich $\Delta = f_Z - 2f_N$. Die Lasereinrichtung wird auf der Grundlage dieser Schwebungsfrequenz stabilisiert.

Bei der Implementierung der Schwebungsmessung an niederfrequenten, vervielfachten Moden mit höherfrequenten Moden wird auf das Element 241 verzichtet. Die Anbindung des Referenzlasers 240 ist jedoch ggf. anwendungsabhängig weiter zur Bereitstellung eines stabilisierten Lasers erforderlich.

Das erläuterte Prinzip läßt sich auch dahingehend umkehren, daß eine Schwebungsmessung an höherfrequenten, geteilten Moden mit niederfrequenten Moden erfolgt.

Der Moden-Regler 214 wirkt so, daß das Schwebungssignal minimiert wird oder eine feste Schwebungsfrequenz besitzt. Als Führungsgröße wird im letzteren Fall beispielsweise das Signal eines Lokaloszillators (z.B. vom Generator 250) oder ein davon abgeleitetes Signal verwendet. Mit der Moden-Regelung wird die ausgewählte erste Bezugsmode des Frequenzkamms auf einen festen Frequenzabstand in Bezug auf die Referenzfrequenz $f_{ref}$ oder umgekehrt die Referenzfrequenz $f_{ref}$ auf einen festen Frequenzabstand in Bezug auf die Bezugsmode fixiert. Die Fixierung einer Mode des Frequenzkamms kann mit einer außerordentlich hohen Relativgenauigkeit erfolgen. Welches Vorzeichen der Frequenzabstand der Bezugsmode von der Referenzfrequenz besitzt, läßt sich aus dem Verhalten des Reglers 214 ableiten.

Mit dem Moden-Regelkreis I wird bei Regelung der Dispersion die Lage des Frequenzkammes relativ zur Referenzfrequenz durch Fixierung einer ausgewählten Mode geregelt, dabei aber auch der Modenabstand aller Moden des Ausgangspulses verändert. Um nun den anwendungsabhängig gewünschten Modenabstand mit der fixierten Bezugsmode einzustellen, erfolgt mit dem Wiederholfrequenz-Regelkreis II die Einstellung der Gruppenumlaufzeit bzw. der effektiven Resonatorlänge des Pulslasers. Im Wiederholfrequenz-Regelkreis II werden die Ausgangspulse über den Spiegel 202 zu den Elementen 220 gelenkt. Das elektrische Ausgangssignal des lichtempfindlichen Elements 221 (Photodiode oder Photomultiplier) wird als Basisfrequenz oder als höhere Harmonische (z.B. 100. oder 200. Harmonische) von dieser am Mischer 222 mit dem Signal des Referenzfrequenzgenerators 250 für Mikrowellen- oder Radiofrequenzen elektrisch gemischt, wobei sich eine Differenz- oder Schwebungsfrequenz zwischen der Pulswiederholfrequenz $f_r$ der Ausgangspulse (oder der höheren Harmonischen) und der Radiofrequenz bildet, die beide im GHz-Bereich liegen. Dieses Schwebungssignal wird als Regelgröße vom (Wiederholfrequenz-) Regler 224 zur Einstellung der Resonatorlänge, z.B. am Schubantrieb 5 gemäß Fig. 1, oder bei Kopplung des Modenreglers 214 mit der Resonatorlängen-Stelleinrichtung zur Einstellung der Dispersion verwendet. Als Führungsgröße dient wie beim Moden-Regler 214 das Signal des Lokaloszillators. Alternativ erfolgt eine Minimierung des Schwebungssignals. Über die fixierte Einstellung der Wiederholfrequenz $f_r$ der Ausgangspulse und damit des Modenabstandes einerseits und der Frequenz einer ausgewählten Mode andererseits erfolgt eine vollständige Stabilisierung der Ausgangspulse der Lasereinrichtung 200 relativ zum Referenzlaser 240.

Für das Zusammenwirken der Moden- und Wiederholfrequenz-Regelkreise I und II ist deren gegenseitige Abhängigkeit von Bedeutung. Während der Moden-Regelkreis I die absolute Einstellung einer ersten Bezugsmode erlaubt, können mit dem Wiederholfrequenz-Regelkreis II über die Änderung der Resonatorlänge sowohl die Pulswiederholfrequenz $f_r$ (entspricht dem Modenabstand) als auch die Frequenzlage der Moden verändert werden. Wenn mit dem Wiederholfrequenz-Regelkreis II die Pulswiederholfrequenz $f_r$ festgehalten wird, so wird mit dem Moden-Regelkreis I die Frequenzlage der Moden definiert. Wenn mit dem Wiederholfrequenz-Regelkreis II die Frequenzlage der Moden festgehalten wird, so wird mit dem Moden-Regelkreis I die Pulswiederholfrequenz $f_r$ verändert. Abweichend von der oben beschriebenen Gestaltung ist es daher alternativ möglich, daß der Regler 214 die Resonatorlängen-Stelleinrichtung und der Regler 224 die Dispersions-Stelleinrichtung regelt.

Die Regelkreise I und II erlauben zwar bereits eine vollständige Laserstabilisierung relativ zum Referenzlaser 240. Diese ist somit von der Genauigkeit des optischen Referenzfrequenzgenerators und ggf. einer Frequenzvervielfachung abhängig. Der Referenzlaser 240 stellt bei Präzisionsanwendungen ein gesondert stabilisiertes und dennoch relativ ungenaues, platzaufwendiges und empfindliches Gerät dar. Gemäß einer für praktische Anwendungen, insbesondere außerhalb des Laborbereiches, bevorzugten Ausführungsform der Erfindung ist vorgesehen, den optischen Referenzfrequenzgenerator selbst mit den stabilisierten Ausgangspulsen der Lasereinrichtung 200 zu stabilisieren. Hierzu wird der Referenzlaser-Regelkreis III eingerichtet, der wie folgt funktioniert.

Das in Fig. 2 dargestellte Gesamtsystem besitzt drei Freiheitsgrade in Bezug auf den Betrieb der Lasereinrichtung 200 und des Referenzlasers 240. Diese Freiheitsgrade umfassen erstens die Lage der ersten Bezugsmode bei einer bestimmten optischen Frequenz, zweitens den Modenabstand entsprechend der Pulswiederholfrequenz $f_r$ im Radiofrequenzbereich und drittens die Frequenz des Referenzlasers 240. Bei der Lasereinrichtung 200 können über die Resonatorlänge und/oder über die lineare Dispersion die Pulswiederholfrequenz $f_r$ und die absolute Modenlage im Resonator eingestellt werden. Eine höherfrequente Bezugsmode des stabilisierten Frequenzkammes wird nun zur Regelung des Referenzlasers 240 bzw. zur Ableitung eines Frequenznormals für diesen verwendet. Für jeden der drei Freiheitsgrade ist also ein Regelkreis vorgesehen. Die Moden- und Wiederholfrequenz-Regelkreise I bzw. II verwenden als Bezugsgrößen die optische Referenzfrequenz bzw. die Radioreferenzfrequenz der Referenzfrequenzgeneratoren 240 bzw. 250. Im dritten Regelkreis wird das Regelungsprinzip umgekehrt: die optische Referenzfrequenz wird auf einen bestimmten Wert geregelt. Hierzu wird wiederum ein aus zwei optischen Frequenzen abgeleitetes Schwebungssignal als Regelgröße verwendet. Die erste Frequenz wird von der optischen Referenzfrequenz $f_{ref}$ selbst abgeleitet, während die zweite Frequenz durch eine weitere Bezugsmode im Frequenzkamm der Ausgangspulse, die einen vorbestimmten Referenzabstand von der im Moden-Regelkreis I eingestellten Mode besitzt, oder eine höhere Harmonische oder ein Bruchteil der Frequenz dieser Bezugsmode gegeben ist.

Der Referenzlaser-Regelkreis III enthält gemäß Fig. 2 als signalgebende Elemente 230 das lichtempfindliche Element 231 und das frequenzselektive Element 232. Ausgangspulse der Lasereinrichtung 200 werden über den Spiegel 206 und das frequenzselektive Element 232 (z.B. optisches Gitter) auf das lichtempfindliche Element 231 gelenkt. Gleichzeitig empfängt dieses ein frequenzverdoppeltes Signal vom Referenzlaser 240, das nach Passage des Spiegels 207 in der SHG-Einrichtung 241 (Einrichtung zur Erzeugung der zweiten Harmonischen, z.B. KDPoder $KNbO_3$-Kristall) gebildet und über den Spiegel 208 zum lichtempfindlichen Element 231 gelenkt wird. Das lichtempfindliche Element 231 ist wiederum eine Photodiode oder ein Photomultiplier. Da im Referenzlaser-Regelkreis III höhere optische Frequenzen und damit kürzere Wellenlängen als im Moden-Regelkreis I verarbeitet werden, wird jedoch als lichtempfindliches Element 231 ein Photomultiplier bevorzugt.

Die Regelung im dritten Regelkreis III basiert erneut auf der Beobachtung eines Schwebungssignals, das bei Überlagerung der frequenzverdoppelten Referenzfrequenz mit der höherfrequenten Bezugsmode der Ausgangspulse generiert wird. Wie in Figur 5 schematisch illustriert ist, besitzt die höherfrequente Mode $M_2$ der Ausgangspulse einen definierten Frequenzabstand gegenüber der im Moden-Regelkreis I fest eingestellten Bezugsmode $M_1$. Der Frequenzabstand entspricht dem Produkt aus der Modenzahl N zwischen den Bezugsmoden $M_1$ und $M_2$ im Moden- bzw. Referenzlaser-Regelkreis I bzw. III und dem Modenabstand zwischen zwei einzelnen Moden $f_r$, der durch den Wiederholfrequenz-Regelkreis II festgelegt ist. Die Modenzahl zwischen den Bezugsmoden wird durch einen Modenzähler 260 festgestellt. Die Funktion des Modenzählers wird unten erläutert. Alternativ ist die Feststellung der Absolutlage der höherfrequenten Bezugsmode $M_2$ auch durch Vergleich mit einer nahe gelegenen, genau bekannten atomaren Resonanz oder bei genügend großen Pulswiederholfrequenzen (> 300 MHz) durch direktes Messen der Moden mit einem Wavemeter (z.B. vom Typ Burleigh-WA1500) möglich.

Das elektrische Ausgangssignal des lichtempfindlichen Elements 231 besitzt einen mit der Differenz- oder Schwebungsfrequenz $\delta f$ aus der doppelten Referenzfrequenz [$2f_{ref} = 2(M_1 \cdot f_r + f_p)$] und der Frequenz der Bezugsmode bei $M_2$ ($M_2 \cdot f_r + f_p$) oszillierenden Signalanteil, der als Regelgröße im (Referenzlaser-)Regler 234 verarbeitet wird. Ändert sich die Referenzfrequenz $f_{ref}$ um $\Delta f$, so ändern sich die Beiträge zur Schwebung entsprechend um $2\Delta f$ bzw. $\Delta f$. Für $\delta f$ gilt bei $M_2 = 2M_1$:

$$\delta f = 2f_{ref} - (M_1 \cdot f_r + f_p) = 2(M_1 \cdot f_r + f_p) - (2M_1 \cdot f_r + f_p) = f_p$$

Die Schwebungsfrequenz ist also gerade gleich der Schlupffrequenz $f_p$. Zur Stabilisierung von $f_{ref}$ ist somit das Schwebungssignal $\delta f$ auf Null zu minimieren oder auf einen Lokaloszillator abzustimmen. Der Referenzlaser-Regler 234 ist beispielsweise dazu eingerichtet, die optische Frequenz des Referenzlasers 240 mit einer Referenzlaser-Stelleinrichtung so einzustellen, daß die Schwebungsfrequenz einem vorbestimmten Wert entspricht. Ist der Referenzlaser 240 ein Diodenlaser, so wird dieser mit dem Regler 234 stromstabilisiert oder mit einem als Stelleinrichtung dienenden externen beweglichen Gitter stabilisiert. Für den Fall eines diodengepumpten Festkörperlasers als Referenzlaser 240 erfolgt eine Stabilisierung mit einem als Stelleinrichtung dienenden Piezoregler der Resonatorlänge oder einem elektro-optischen Modulator. Der besondere Vorteil des Aufbaus mit den drei Regelkreisen besteht nun darin, daß an den Referenzlaser 240 keine besonders hohe Eigenstabilität gefordert wird. Der Referenzlaser 240 wird jedoch im Frequenzraum durch die mit dem Radiofrequenzgenerator 250 vorgegebene Genauigkeit von z.B. $10^{-14}$ stabilisiert. Bei Bezug auf optische Frequenznormale könnte sogar eine Relativgenauigkeit der Stabilisierung bis zu $10^{-14}$ erwartet werden. Es kann ein Referenzfrequenzgenerator verwendet werden, dessen Frequenz an das Meßproblem angepaßt ist. Damit wird mit der Gesamtanordnung ein in der Praxis vielseitig anwendbarer, nicht auf den Laborbereich beschränkter optischer Frequenzgenerator geschaffen.

Der Modenzähler 260 arbeitet nach dem folgenden Prinzip. Zur Modenzählung erfolgt eine Ausdünnung der eng benachbarten Moden innerhalb des Frequenzkammes in einen gestreckten Frequenzbereich, in dem die Moden mit einem kommerziell verfügbaren Wavemeter meßbar sind. Hierzu enthält der Modenzähler 260 einen passiven Resonator mit einem gegenüber dem Resonator der Lasereinrichtung 200 erweiterten freien Spektralbereich. Es ist beispielsweise ein 20-fach erweiterter Spektralbereich vorgesehen. In diesem Resonator werden entsprechend nur noch beispielsweise jede zwanzigste Mode transmittiert, so daß ein gestreckter Modenabstand ausgebildet wird (z.B. 1.5 GHz). Dies entspricht im Zeitbild einem 20-fach erniedrigten Pulsabstand $\tau$. Mit dem ausgedünnten Frequenzkamm erfolgt die selbe Regelung mit dem Referenzfrequenzgenerator 240 und dessen frequenzverdoppelten Signal (nach 241) wie mit dem ursprünglichen Kamm entsprechend dem Referenzlaser-Regelkreis. Es ergeben sich zwei Schwebungssignale, deren Abstand mit dem Wavemeter ausgewertet werden kann. Aus dieser Frequenzermittlung und der bekannten Modenausdünnung im passiven Resonator des Modenzählers 260 kann dann auf die Frequenzlage der Bezugsmoden und die Anzahl der zwischen ihnen liegenden Moden rückgeschlossen werden.

In Fig. 2 ist dem Ausgang der Lasereinrichtung 200 nachgeordnet eine Einrichtung 201 zur Verbreiterung des Ausgangsspektrums der Lasereinrichtung 200 durch Selbstphasenmodulation in einem nichtlinearen Medium illustriert. Diese Einrichtung 201 ist beispielsweise eine optische Faser. Die Selbstphasenmodulation in optischen Fasern ist beispielsweise von K. Imai et al. in "IEEE Journal of Quantum Electronics", Bd. 34, 1998, S. 54 ff., beschrieben. Je nach der Leistung der Ausgangspulse kann eine spektrale Verbreiterung bis hin zum quasi-Weißlichtkontinuum erzielt werden. Dies ist insbesondere dann von Bedeutung, wenn der Frequenzkamm Moden der Frequenz f und von deren zweiten Harmonischen 2f enthalten soll. In diesem Fall wird der Aufbau der Regelkreise I, III vereinfacht, in dem sich der erste Regelkreis I auf die Bezugsmode bei f und der dritte Regelkreis III auf die Bezugsmode 2f bezieht. Falls die Einrichtung 201 nicht eingesetzt wird, ist es zur Erzielung der Referenzlaser-Regelkreises III gegebenenfalls erforderlich, Teilerstufen einzuführen, um ein auswertbares Schwebungssignal zwischen der zweiten Harmonischen der optischen Referenzfrequenz und einer Bezugsmode des Frequenzkamms oder einer Teilfrequenz von dieser zu erzielen.

Die Einrichtung 201 ist vorzugsweise so ausgelegt, daß eine Spektrenverbreiterung mindestens über eine Oktave erfolgt, so daß der Modenkamm von f bis 2f reicht. Dies wird z. B. mit einer sog. "Photonic Crystal Faser" erzielt, die einen Faserkern und um diesen axial verlaufende mikroskopisch kleine Luftkanäle besitzen (siehe D. Mogilevtsev et al. in "Optics Letters", Bd. 23, 1998, S. 1662 ff., T. A. Birks in "Optics Letters", Bd. 22, 1997, S. 961 ff., oder T. A. Birks in "IEEE Photonics Letters", Bd. 11, 1999, S. 674 ff.). Eine Faser mit Spektrenverbreiterung auf 2f liefert Vorteile für den Aufbau der unten erläuterten Regelkreise.

Beim Schema gemäß Fig. 2 wird die Lasereinrichtung unter Bezug auf den Referenzlaser 240 stabilisiert. Umgekehrt besteht auch die Möglichkeit, die Frequenz des Referenzlasers 240 oder davon abgeleitete (geteilte oder vervielfachte) Frequenzen zu messen, indem eine erfindungsgemäße Lasereinrichtung im stabilisierten Betrieb mit dem Referenzlaser 240 phasengekoppelt und aus dem Schwebungssignal des (hier nicht geregelten) Referenzlaser-Regelkreises III die Frequenz des Referenzlasers 240 ermittelt wird. Damit wird unmittelbar und hochgenau die Frequenz des Referenzlasers 240 mit dem Radiofrequenzgenerator 250 (Relativgenauigkeit mindestens $10^{-16}$) in Bezug gesetzt und das gewünschte "Uhrwerk" zur Überbrückung des Intervalls zwischen optischen Frequenzen und Radiofrequenzen geschaffen.

Abwandlungen des Schemas gemäß Fig. 2 sind in den Fign. 3 und 4 illustriert. Gleiche Teile sind mit gleichen Bezugszeichen versehen. Im folgenden werden lediglich die Unterschiede gegenüber dem Aufbau gemäß Fig. 2 erläutert.

Der Moden-Regelkreis I ist gemäß Fig. 3 in zwei Teilregelungen Ia und Ib aufgeteilt. Die eine Teilregelung Ia dient der Kopplung eines ersten Referenzlaser 240a, der z.B. ein Diodenlaser ist und bei einer bestimmten Frequenz $f_{ref}$ läuft, mit einem ersten Moden-Regler 214a an eine Bezugsmode des Puls-Frequenzkammes. Die andere Teilregelung Ib entspricht der oben erläuterten Moden-Regelung der Lasereinrichtung 200 auf der Basis eines Schwebungssignals aus der doppelten Bezugsfrequenz $f_{ref}$ und der Frequenz eines bei $2f_{ref}$ betriebenen und an eine höherfrequente Bezugsmode im Frequenzkamm der Pulse angekoppelten zweiten Referenzlasers 240b. Ein Bruchteil (z. B. 1/128) der Schwebungsfrequenz wird als Regelgröße dem zweiten Moden-Regler 214b zugeführt. Durch diese Frequenzteilung des Schwebungssignals, die auch bei der Gestaltung gemäß Fig. 2 vorgesehen sein kann, wird die Bandbreite der Regelung um den Teilungsfaktor erhöht. Damit wird die relativ geringe Regelgeschwindigkeit (Bandbreite) der Piezoantriebe in der Lasereinrichtung kompensiert. Die Kopplung des zweiten Referenzlasers 240b an den Modenkamm im Referenzlaser-Regelkreis III ist symmetrisch zur Kopplung zwischen der unteren Bezugsmode und dem ersten Referenzlaser 240a.

Der Moden-Regelkreis I ist entsprechend dem oben erläuterten Prinzip auch gemäß Fig. 4 in zwei Teilregelungen Ia und Ib aufgeteilt. Zusätzlich ist auch der Referenzlaser-Regelkreis III in zwei Teilregelungen IIIa und IIIb aufgeteilt, von denen eine Teilregelung IIIa der Überbrückung zwischen der höherfrequenten Bezugsmode und dem bei $2f_{ref}$ betriebenen zweiten Referenzlaser 240b dient. Die andere Teilregelung IIIb entspricht im wesentlichen der Referenzlaser-Regelung III gemäß Fig. 3.

Die Teilregelung IIIa umfaßt die Ankopplung des Referenzlasers 240c an die höherfrequente Bezugsmode des Frequenzkammes. Der Referenzlaser 240c wird bei $3/2f_{ref}$ betrieben und umfaßt im wesentlichen eine Teilerstufe gemäß Fig. 13. Nach Frequenzverdopplung des Ausgangssignals des Referenzlasers 240c bei 242 und Summenbildung aus dem Ausgangssignal $f_{ref}$ des ersten Referenzlasers 240 und dem Ausgangssignal $2f_{ref}$ des zweiten Referenzlasers 240b bei 243 wird am lichtempfindlichen Element 244 ein Schwebungssignal erzeugt, auf dessen Grundlage der zweite Referenzlaser 240b stabilisiert wird.

Die Anwendung der Erfindung ist nicht auf die Stabilisierung eines Pulslasers beschränkt. Die unter Bezug auf die Fign. 2 - 4 erläuterten Prinzipien können auch verwendet werden, um mit einer stabilisierten Lasereinrichtung eine unbekannte optische Frequenz zu messen. Anwendungen der Erfindung zur Stabilisierung und/oder Messung optischer Frequenzen werden im folgenden beispielhaft erläutert.

Anwendungsbeispiel 1: Messung oder Synthese optischer Frequenzen

Mit einer erfindungsgemäß stabilisierten Lasereinrichtung können erstmalig optische Frequenzen oder Frequenzdifferenzen mit einer Genauigkeit von mindestens $10^{-16}$ unmittelbar oder über wenige Teilerstufen (2 oder 3) zu einem Frequenznormal (z.B. zu einer Atomuhr) in Bezug gesetzt werden. Dies bedeutet entweder, von einer optischen Frequenz (z. B. Meßlicht eines Spektroskopielasers) auszugehen und diese mit einem Radiofrequenznormal in Beziehung zu setzen oder von einer Radiofrequenz auszugehen und damit eine optische Frequenz zu stabilisieren. Die Überbrückung der Frequenzdifferenz zwischen optischer Frequenz und Radiofrequenz wird im folgenden unter Bezug auf die Fign. 6 - 8 erläutert.

Das Ziel der Anwendung besteht beispielsweise in der Ermittlung oder Erzeugung der Frequenz f des Referenzlasers (siehe Fig. 6). Der Referenzlaser entspricht dem Referenzfrequenzgenerator 240 in Fig. 2. Im folgenden wird lediglich auf die Ermittlung der Frequenz f Bezug genommen. Zur Erzeugung der Frequenz f werden die angegebenen Prinzipien der Phasenkopplung lediglich umgekehrt durchlaufen.

Die Frequenz f wird gemäß Fig. 6 durch Erfassung der Frequenzdifferenz zwischen f und 2f (2f - f = f) gemessen. Die Frequenzdifferenz f wird durch Vergleich mit einem Frequenzkamm einer erfindungsgemäß stabilisierten Lasereinrichtung erfaßt. Die mit einem Frequenzkamm überbrückbaren Frequenzdifferenzen hängen von der Pulsdauer der Ausgangspulse der Lasereinrichtung ab und betragen für das o. a. Beispiel (Laseraufbau gemäß Fig. 1 mit rd. 73 fs) bis zu 20 THz, bei Einsatz der Faser 201 mindestens 50 THz oder bei Pulsdauern von rd. 10 fs bis zu 100 THz. Die mit der Faser 201 erzielte Verbreiterung hängt auch von der Pumpleistung am aktiven Medium des Pulslasers ab. Für optische Frequenzen von rd. 300 THz muß daher mit der verfügbaren Technik eine Teilung der Frequenzdifferenz f erfolgen, bis sie innerhalb des Frequenzkammes liegt. Bei genügend kurzen Pulsen kann bei optischen Frequenzen auf die Teilung verzichtet werden.

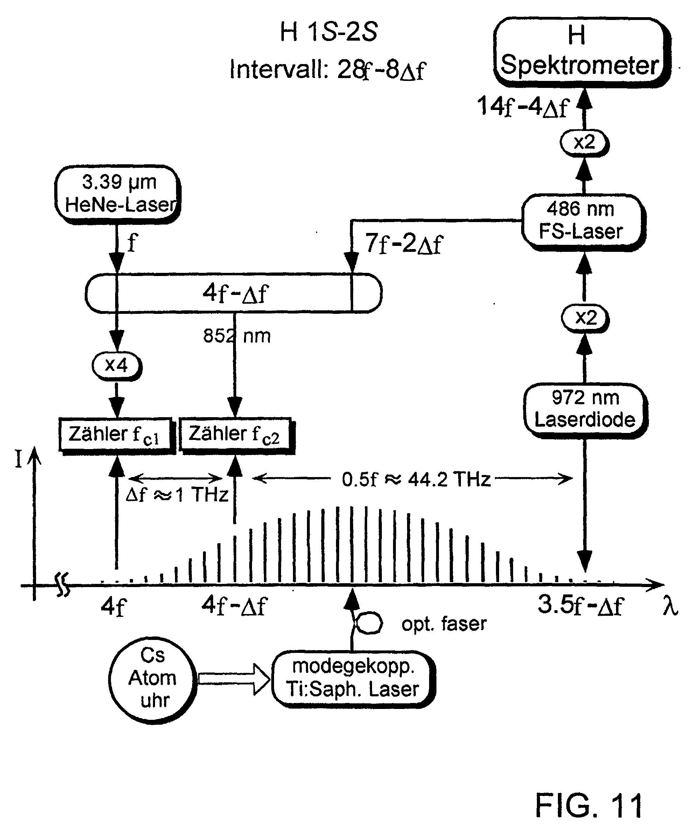

Mit den oben erläuterten Techniken wird der Referenzlaser mit f mit einer unteren Bezugsmode $M_1$ des Frequenzkammes in Bezug gesetzt. Die Frequenzlücke zwischen f und 2f wird mit einer Teilerstufe gemäß Fig. 13 auf eine Frequenzlücke zwischen f und 3/2f geteilt. Die Frequenzdifferenz f/2 liegt innerhalb des Frequenzkammes. Die Frequenz 3/2f wird mit einer oberen Bezugsmode $M_2$ des Frequenzkammes in Bezug gesetzt. Aus dem erfindungsgemäß unter Bezug auf eine Atomuhr stabilisierten und damit bekannten Modenabstand und den Schwebungsfrequenzen wird erfaßt, welche Moden zu f bzw. 3/2 f gehören, und nach Auszählen der Moden die gesuchte Frequenz f ermittelt. Alternativ können anwendungsabhängig auch Intervalle z.B. zwischen 4f und 7/2f überbrückt werden (siehe Fig. 11).

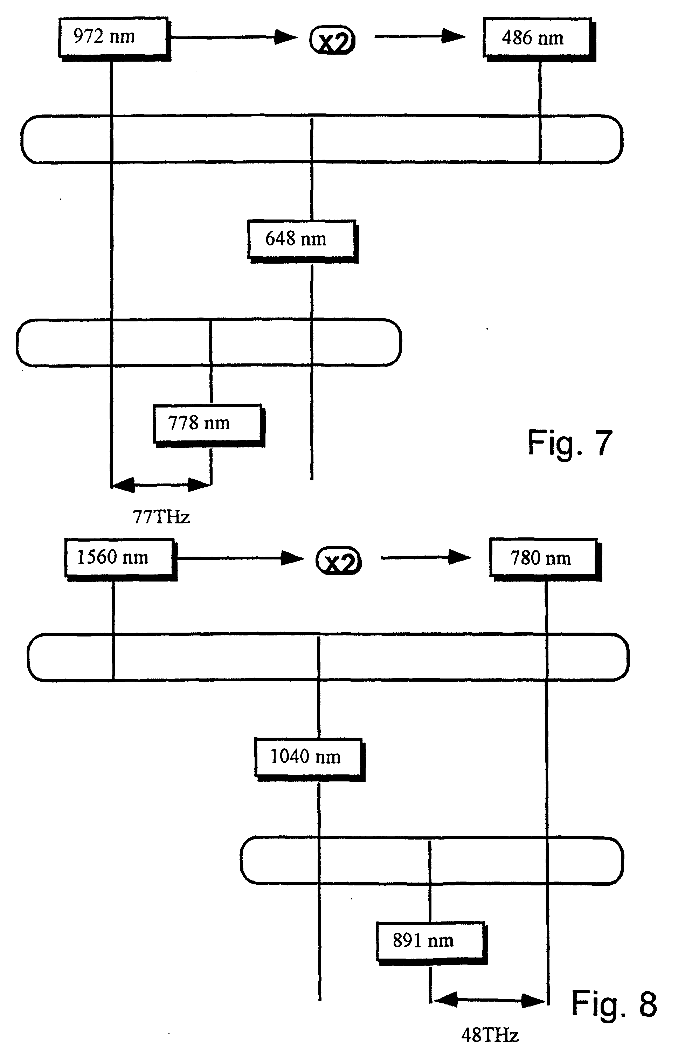

Welche der Frequenzen f bzw. 2f oder der Bezugsmoden $M_1$ bzw. $M_2$ als Anknüpfung für die zu messende oder zu erzeugende Frequenz verwendet wird, hängt von der konkreten Anwendung und den dabei interessierenden Wellenlängen ab. Dies ist in den Fign. 7 und 8 illustriert. Gemäß Fig. 7 erreicht man bei der Messung eines Referenzlasers bei $\lambda = 972$ nm nach Verdopplung und zweifacher Teilung des Frequenzintervalls von rd. 300 THz eine Wellenlänge $\lambda = 778$ nm, die von $\lambda = 972$ nm einen Abstand von 77 THz besitzt. Je nach verfügbarem Frequenzkamm muß sich eine weitere Teilung anschließen. Gemäß Fig. 8 besteht hingegen ein Interesse an der Messung eines Referenzlasers mit $\lambda = 1560$ nm. In diesem Fall wird an die verdoppelte Frequenz bei $\lambda = 780$ nm angeknüpft. Nach zwei Teilerstufen ergibt sich ein Intervall zwischen $\lambda$ = 780 nm und $\lambda$ = 891 nm mit 48 THz, das ohne weitere Teilerstufen mit einem 50 THz-Kamm überbrückt werden kann.

Die Teilerkette kann sich somit auf die obere (2f) oder untere (f) Startfrequenz beziehen. Ferner ist die Wahl der Startfrequenz wichtig für die mit wenigen Teilerstufen erzielbare Frequenzdifferenz. Für Frequenzen z.B. in einem interessierenden Wellenlängenbereich von rd. 700 nm bis 1700 nm können die Teilerstufen entsprechend so gewählt werden, daß die Anknüpfung an den Frequenzkamm der Lasereinrichtung optimiert wird. Der Bereich um $\lambda$ = 1560 nm ist von besonderem Interesse für Anwendungen der Erfindung in der Telekommunikation.

Mit dem Bezug der Referenzfrequenz auf die mit einer Genauigkeit von $10^{-14}$ arbeitenden Atomuhr wird vorteilhafterweise gegenüber dem Bezug auf einen stabilisierten Helium-Neon-Laser mit einer Genauigkeit von $10^{-13}$ eine Größenordnung bei der Genauigkeit bei der Einstellung der Lasereinrichtung bei gleichzeitig erheblich vereinfachtem Aufbau erzielt.

Anwendungsbeispiel 2: Messung von Frequenzabständen

Die Anwendung der Erfindung im Bereich der Präzisionsspektroskopie basiert auf der Verwendung einer gemäß den Fign. 2 - 4 stabilisierten Lasereinrichtung mit den Moden- und Wiederholfrequenz-Regelkreisen zur Vermessung der Frequenzlücke zwischen einem Referenzlaser und einem Spektroskopielaser. Hierzu ist der Referenzlaser-Regelkreis (III) nicht erforderlich. Es wurde beispielsweise mit einer erfindungsgemäßen Lasereinrichtung die $D_1$-Linie von Cäsium bei 335 THz (895 nm) vermessen. Dies erfolgte durch Ermittlung des Frequenzabstandes zwischen der vervierfachten Frequenz eines methanstabilisierten Helium-Neon-Lasers (4 · 88.4 THz = 354 THz) und der $D_1$-Linie unter Verwendung eines Frequenzkamms mit rd. 244000 Moden eines stabilisierten Titan-Saphir-Lasers. Das Meßprinzip ist in Fig. 9 illustriert. Im oberen Teil von Fig. 9 ist der Frequenzkamm, der sich mit 244000 Moden über 18,39 THz erstreckt, schematisch dargestellt. Am niederfrequenten Ende des Frequenzkammes erfolgt dessen Phasenkopplung an eine genau bekannte Mode $M_1$ auf der Basis der Ausgangsfrequenz des Helium-Neon-Lasers 91. Mit dem Helium-Neon-Laser 91 wird zunächst nach dem oben erläuterten Schwebungssignal-Regelungsprinzip ein Farbzentrenlaser 92 stabilisiert, dessen verdoppelte Ausgangsfrequenz wiederum zur Stabilisierung eines Diodenlasers 93 benutzt wird. Simultan erfolgt über den Regler 94 ($\Phi$) die Einstellung des modengekoppelten Pulslasers 95 wie bei der Stabilisierung gemäß Fig. 2.

Am hochfrequenten Ende des Frequenzkammes wird der Diodenlaser 96 an einer geeigneten Bezugsmode $M_2$ phasengekoppelt, wobei die Zahl der Moden in Bezug auf die niederfrequente Bezugsmode nach dem obengenannten Verfahren ausgezählt ist. Durch Einführung einer definierten, im 100- bis 200-kHz-Bereich um 1 MHz variierten Offsetfrequenz in Bezug auf die Frequenz des Lasers 93 kann über die entsprechende Verschiebung des Modenkammes die Frequenz des Diodenlasers 96 durchgestimmt werden.

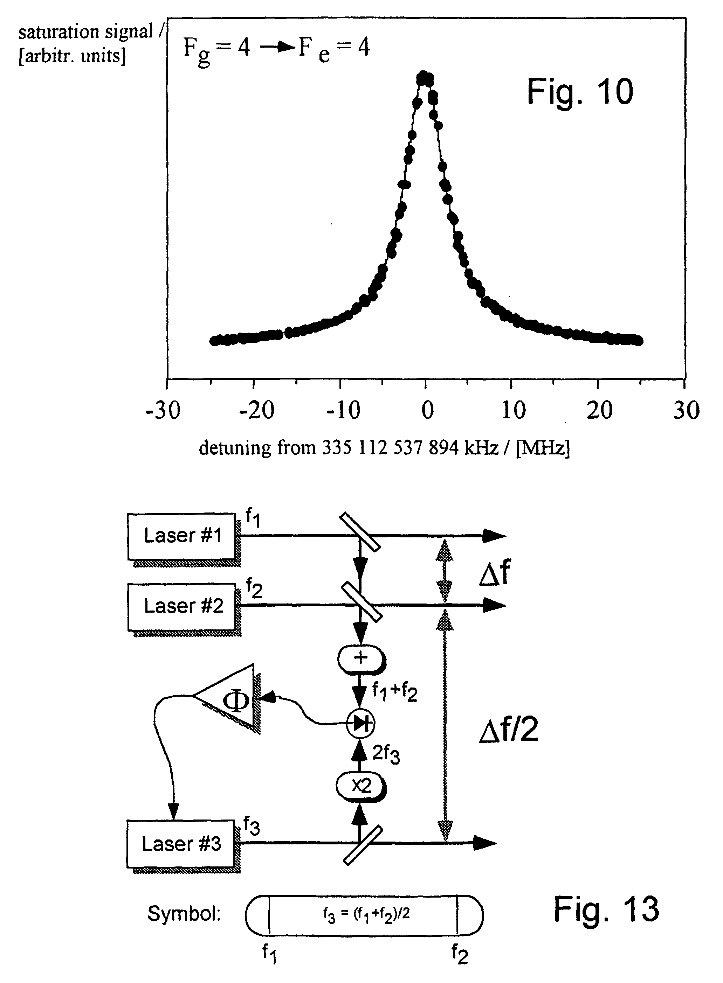

Um die $D_1$-Linie von Cäsium in einem Sättigungsspektrometer (z.B. mit zwei linear polarisierten, entgegengesetzt laufenden Laserstrahlen gleicher Intensität, z.B. 10 $\mu$W/cm$^2$, Cäsiumzelle, Länge: 7.5 cm, Raumtemperatur) zu vermessen, erfolgt ein Durchstimmen des Diodenlasers 96 über den Linienverlauf. Einzelheiten der an sich bekannten Sättigungsspektroskopie werden hier nicht angegeben. Fig. 10 zeigt beispielhaft den Verlauf des Übergangs $F_g$ = 4 $\rightarrow$ $F_e$ = 4 der $D_1$-Linie. Die Lage der Mittenfrequenz kann durch Einstellung der entsprechenden Schwebungsfrequenzen bei der Phasenkopplung des Frequenzkamms und der Zahl der Moden zwischen den oberen und unteren Bezugsmoden mit einer bisher nicht erreichten Genauigkeit angegeben werden. Dies ist sowohl für die hochgenaue Ermittlung von Substanzeigenschaften als auch für eine genauere Messung der Feinstrukturkonstanten $\alpha$ von Bedeutung.

Fig. 11 illustriert eine Frequenzkette zur Präzisionsmessung des Wasserstoff-1S-2S-Übergangs mit erfindungsgemäß stabilisierten Lasern. Diese Frequenzkette ist ein Beispiel für die Überbrückung eines Frequenzintervalls zwischen 4f und 7/2f. Die Absolutfrequenz des 1S-2S-Übergangs (rd. 2466 THz = 28f-8$\Delta$f) wird in Frequenzintervalle der Größe 0.5 f und $\Delta$f konvertiert, die mit dem stabilisierten Titan-Saphir-Laser gemessen und unmittelbar mit der Frequenz der Cs-Atomuhr in Beziehung gesetzt werden.

Weitere Anwendungen

Neben der Stabilisierung oder Messung optischer Frequenzen für Frequenz- und/oder Zeitmeßzwecke bestehen auch Anwendungen der erfindungsgemäßen Laserstabilisierung im Bereich der Telekommunikation. Bei der standardmäßigen Übertragung einer Vielzahl von Trägerfrequenzen sind bisher bei der optischen Datenübertragung Frequenzdifferenzen zwischen den Trägerfrequenzbändern in der Größenordnung von 100 GHz erforderlich. Dieses beschränkt die auf einem Träger plazierbaren Frequenzbänder und damit die Übertragungskapazität. Eine engere Anordnung der Frequenzbänder mit Abständen unterhalb 10 GHz wird durch eine erfindungsgemäß stabilisierte Lasereinrichtung möglich, wobei dieser Wert noch von der übertragenen Informationsmenge abhängt.

Ferner wird bei der zukünftigen Bereitstellung "optischer" Atomuhren, die um mehrere Größenordnungen genauer laufen als die bisherigen Cs-Atomuhren, ein neuer Bezugspunkt für die Messung optischer Frequenzlücken geschaffen, der die Implementierung des Referenzlaser-Regelkreises zur Messung optischer Frequenzen überflüssig machen kann.

Mit einer kompletten Stabilisierung mit den Regelkreisen I, II und III wird das gewünschte "Uhrwerk" bereitgestellt, mit dem der Frequenzabstand zwischen Radiofrequenzen und optischen Frequenzen überbrückt werden kann, insbesondere um eine optische Frequenz bereitzustellen, die mit einem Radiofrequenznormal stabilisiert ist oder um eine Radiofrequenz zu erzeugen, die in Bezug auf ein optische Frequenznormal Stabilisiert ist. Weitere Anwendungen bestehen in allen Bereichen der Frequenzund Zeitmeßtechnik, in denen bisher mit den eingangs erläuterten Frequenzteilerstufen gearbeitet werden mußte.

Die in der vorstehenden Beschreibung, den Zeichnungen und den Ansprüchen offenbarten Merkmale der Erfindung können sowohl einzeln als auch in beliebiger Kombination für die Verwirklichung der Erfindung in ihren verschiedenen Ausgestaltungen von Bedeutung sein.

**Patentansprüche**

1. Verfahren zum Betrieb einer Lasereinrichtung (1, 200), bei dem in einer Resonatoranordnung (3) umlaufende Lichtpulse, die jeweils aus spektralen Komponenten entsprechend einer Vielzahl longitudinaler Moden (M, $M_1$, $M_2$) der Resonatoranordnung (3) zusammengesetzt sind, erzeugt und einer Kompensation der Gruppengeschwindigkeitsdispersion unterzogen werden,
   **dadurch gekennzeichnet, daß**
   eine vorbestimmte lineare Dispersion in den Lichtweg der Resonatoranordnung (3) eingeführt wird, so daß mindestens eine Mode eine bestimmte Frequenz und/oder der Modenabstand zwischen den Moden einen bestimmten Wert besitzt.

2. Verfahren gemäß Anspruch 1, bei dem die lineare Dispersion in die Resonatoranordnung (3) durch eine spektral spezifisch wirksame Änderung der Resonatorlänge in einem Resonatorzweig eingeführt wird, den die Lichtpulse nach der Kompensation der Gruppengeschwindigkeitsdispersion spektral räumlich getrennt durchlaufen.

3. Verfahren gemäß Anspruch 2, bei dem die lineare Dispersion in die Resonatoranordnung (3) durch Verkippen eines ebenen Resonatorendspiegels (34) eingeführt wird.

4. Verfahren gemäß Anspruch 1, bei dem die lineare Dispersion in die Resonatoranordnung (3) durch ein Verkippen einer transparenten Platte, ein Einschieben eines Prismenpaares in den Lichtweg in der Resonatoranordnung (3), eine Einstellung der wirksamen Pumpleistung zum Pumpen des aktiven Mediums der Lasereinrichtung (1), oder eine Änderung der geometrischen Anordnung der Lasereinrichtung relativ zu einem Pumplaser eingeführt wird.

5. Verfahren gemäß einem der vorhergehenden Ansprüche, bei dem die lineare Dispersion in die Resonatoranordnung (3) im Rahmen eines Moden-Regelkreises (I) in Abhängigkeit von der Frequenzabweichung mindestens einer ersten Bezugsmode ($M_1$) der Lichtpulse von einer Referenzfrequenz ($f_{ref}$) eingeführt wird, die

   - die Ausgangsfrequenz eines optischen Referenzfrequenzgenerators (240),
   - eine höhere Harmonische oder ein ganzzahliger Teil der Ausgangsfrequenz oder der höheren Harmonischen,
   - eine frequenzvervielfachte niederfrequente Bezugsmode der Lichtpulse, oder
   - eine frequenzgeteilte höherfrequente Bezugsmode der Lichtpulse ist.

6. Verfahren gemäß Anspruch 5, bei dem im Moden-Regelkreis (I) Lichtpulse der Lasereinrichtung (1) und Licht mit der Referenzfrequenz ($f_{ref}$) überlagert und auf ein lichtempfindliches Element (211) gerichtet werden, dessen elektrisches Ausgangssignal eine Modulation bei einer Schwebungsfrequenz entsprechend der Abweichung der Frequenz der ersten Bezugsmode ($M_1$) von der Referenzfrequenz ($f_{ref}$) aufweist, wobei ein Regler (214) vorgesehen ist, der die lineare Dispersion der Resonatoranordnung (3) so einstellt, daß das Schwebungssignal minimal ist oder eine vorbestimmte Schwebungsfrequenz besitzt.

7. Verfahren gemäß einem der Ansprüche 5 oder 6, bei dem der optische Referenzfrequenzgenerator (240) in einem Referenzlaser-Regelkreis (III) in Bezug auf eine zweite höherfrequente Bezugsmode ($M_2$) der Lichtpulse stabilisiert wird.

8. Verfahren gemäß einem der Ansprüche 5 bis 7, bei dem der optische Referenzfrequenzgenerator (240) ein stabilisierter Dauerstrichlaser ist.

**9.** Verfahren gemäß einem der Ansprüche 1 bis 4, bei dem die lineare Dispersion in die Resonatoranordnung (3) im Rahmen eines Moden-Regelkreises (Ia, Ib) in Abhängigkeit von der Abweichung der vervielfachten Frequenz eines ersten Referenzlasers (240a), der mit einer ersten niederfrequenten Bezugsmode ($M_1$) der Lichtpulse phasenge- koppelt ist, von der Frequenz eines zweiten Referenzlasers (240b) eingeführt wird, der in einem Referenzlaser- Regelkreis (III) mit einer zweiten höherfrequenten Bezugsmode ($M_2$) der Lichtpulse phasengekoppelt ist.

**10.** Verfahren gemäß Anspruch 9, bei dem der zweite Referenzlaser (240b) mit der zweiten höherfrequenten Bezugs- mode ($M_2$) der Lichtpulse über eine Teilerstufe phasengekoppelt ist.

**11.** Verfahren gemäß einem der vorhergehenden Ansprüche, bei dem die Resonatorlänge der Lasereinrichtung (1) im Rahmen eines Wiederholfrequenz-Regelkreises (II) geregelt wird, in dem die Wiederholfrequenz ($f_r$) der Licht- pulse mit einer Radiofrequenz, die von einem Radioreferenzfrequenzgenerator (250) abgeleitet ist, überlagert wird, wobei ein Regler (224) vorgesehen ist, der die Resonatorlänge der Lasereinrichtung (1) so einstellt, daß ein bei der Überlagerung gebildetes Schwebungssignal minimal ist oder eine vorbestimmte Schwebungsfrequenz besitzt.

**12.** Verfahren gemäß einem der Ansprüche 1 bis 4, bei dem die lineare Dispersion in die Resonatoranordnung (3) im Rahmen eines Wiederholfrequenz-Regelkreises (II) eingeführt wird, in dem die Wiederholfrequenz ($f_r$) der Licht- pulse mit einer Radiofrequenz, die von einem Radioreferenzfrequenzgenerator (250) abgeleitet ist, überlagert wird, wobei ein Regler (224) vorgesehen ist, der die lineare Dispersion der Resonatoranordnung (3) so einstellt, daß ein bei der Überlagerung gebildetes Schwebungssignal minimal ist oder eine vorbestimmte Schwebungsfrequenz besitzt.

**13.** Verfahren gemäß Anspruch 12, bei dem die Resonatorlänge der Lasereinrichtung (1) im Rahmen eines Moden- Regelkreises (I) in Abhängigkeit von der Frequenzabweichung mindestens einer ersten Bezugsmode ($M_1$) der Lichtpulse von einer Referenzfrequenz ($f_{ref}$) geregelt wird, die die Ausgangsfrequenz eines optischen Referenzfrequenzgenerators (240) oder eine höhere Harmonische oder ein ganzzahliger Teil der Ausgangsfrequenz oder der höheren Harmonischen ist.

**14.** Verfahren zum Betrieb eines Referenzlasers (240) bei einer stabilisierten optischen Frequenz, bei dem die Ausgangsfrequenz des Referenzlasers (240) oder eine höhere Harmonische oder ein ganzzahliger Teil der Ausgangsfrequenz oder der höheren Harmonischen mit einer zweiten Bezugsmode (M2) von Lichtpulsen phasengekoppelt wird, die mit einer Lasereinrichtung (1, 200) nach einem Verfahren gemäß einem der Ansprüche 1 bis 13 erzeugt werden, wobei die zweite Bezugsmode (M2) eine andere Frequenz als die erste Bezugsmode (M1) besitzt.

**15.** Verfahren zur Messung der Ausgangsfrequenz eines Referenzlasers (240), bei dem eine Bezugsmode (M1) von Lichtpulsen, die mit einer Lasereinrichtung (1, 200) nach einem Verfahren gemäß einem der Ansprüche 1 bis 13 erzeugt werden, mit der Ausgangsfrequenz des Referenzlasers (240) oder einer höheren Harmonischen oder ein ganzzahliger Teil der Ausgangsfrequenz oder der höheren Harmonischen phasengekoppelt wird und aus den Regelparametern der Lasereinrichtung die Ausgangsfrequenz ermittelt wird.

**16.** Lasereinrichtung (1, 200) zur Erzeugung kurzer Lichtpulse, die eine Resonatoranordnung (3) mit

- einem aktiven Medium (2),
- einer Vielzahl von Resonatorspiegeln mit einem Einkoppelspiegel (31) zum Einkoppeln von Pumplicht für das aktive Medium (2), einem Auskoppelspiegel (32) zur Abgabe der Lichtpulse und mehreren Umlenkspiegeln (33a-c, 34), und
- einer Kompensationseinrichtung (4) zur Kompensation der Gruppengeschwindigkeitsdispersion der Lichtpulse, enthält,

**dadurch gekennzeichnet, daß**
die Resonatoranordnung (3) eine Dispersions-Stelleinrichtung (7, 8, 8') zur Einführung einer linearen Dispersion in den Lichtweg der Resonatoranordnung (3) aufweist.

**17.** Lasereinrichtung gemäß Anspruch 16, bei der die Dispersions-Stelleinrichtung (7) in einem Resonatorzweig auf der vom aktiven Medium (2) abgewandten Seite der Kompensationseinrichtung (4) angeordnet ist.

18. Lasereinrichtung gemäß Anspruch 17, bei der die Dispersions-Stelleinrichtung (7) eine Schwenkeinrichtung (7) an einem als Resonatorendspiegel (34) wirkenden Umlenkspiegel ist.

19. Lasereinrichtung gemäß Anspruch 16, bei der die Dispersions-Stelleinrichtung eine transparente Platte mit einer Kippeinrichtung (8), ein Prismenpaar mit einer Schubeinrichtung (8'), die in der Resonatoranordnung (3) angeordnet sind, eine Einrichtung (9) zur Variation der wirksamen Pumpleistung des Pumplasers, oder eine Einrichtung zur Änderung der geometrischen Anordnung der Lasereinrichtung relativ zu einem Pumplaser umfaßt.

20. Lasereinrichtung gemäß Anspruch 16, die als Ringlaser aufgebaut ist.

21. Lasereinrichtung gemäß einem der Ansprüche 16 bis 20, bei der eine Resonatorlängen-Stelleinrichtung (5) zur Veränderung der Resonatorlänge durch Verstellung der Position eines der Umlenkspiegel (33b) vorgesehen ist.

22. Lasereinrichtung gemäß einem der Ansprüche 16 bis 21, bei der ein Moden-Regelkreis (I, 210, 214) zur Regelung der Dispersions-Stelleinrichtung (7, 8, 8') oder der Resonatorlängen-Stelleinrichtung (5) in Abhängigkeit von der Frequenzabweichung mindestens einer Frequenzkomponente der Lichtpulse von einer Referenzfrequenz ($f_{ref}$), die die Ausgangsfrequenz eines optischen Referenzfrequenzgenerators (240) oder eine höhere Harmonische oder ein ganzzahliger Teil der Ausgangsfrequenz oder der höheren Harmonischen oder eine frequenzvervielfachte niederfrequente Bezugsmode oder eine frequenzgeteilte höherfrequente Bezugsmode der Lichtpulse ist, vorgesehen ist.

23. Lasereinrichtung gemäß Anspruch 22, bei der der Moden-Regelkreis (I, 210, 214) eine Einrichtung (211) zur Erzeugung eines Schwebungssignals aus der Frequenzkomponente der Lichtpulse und der Referenzfrequenz ($f_{ref}$) und einen Moden-Regler (214) für die Dispersions-Stelleinrichtung (7) oder die Resonatorlängen-Stelleinrichtung (5) umfaßt, wobei der Moden-Regler dazu ausgebildet ist, die Dispersions-Stelleinrichtung (7) oder die Resonatorlängen-Stelleinrichtung (5) so zu betätigen, daß das Schwebungssignal minimal ist oder eine vorbestimmte Schwebungsfrequenz besitzt.

24. Lasereinrichtung gemäß Anspruch 22 oder 23, bei der ein Referenzlaser (240) und ggf. Vervielfacher- und oder Teilerstufen zur Erzeugung der Referenzfrequenz ($f_{ref}$) vorgesehen sind und die Einrichtung zur Erzeugung des Schwebungssignals ein lichtempfindliches Element (211) umfaßt.

25. Lasereinrichtung gemäß Anspruch 24, bei der am lichtempfindlichen Element ein Filterelement (212) zur spektral selektiven Erfassung der Lichtpulse vorgesehen ist.

26. Lasereinrichtung gemäß einem der Ansprüche 16 bis 21, bei der ein Moden-Regelkreis (Ia, Ib, 210, 214) zur Regelung der Dispersions-Stelleinrichtung (7, 8, 8') oder der Resonatorlängen-Stelleinrichtung (5) in Abhängigkeit von der Abweichung der Frequenz eines ersten Referenzlasers (240a), der mit einer ersten niederfrequenten Bezugsmode (M1) der Lichtpulse phasengekoppelt ist, von der Frequenz eines zweiten Referenzlasers (240b), der mit einer zweiten (M2) höherfrequenten Bezugsmode der Lichtpulse phasengekoppelt ist, vorgesehen ist.

27. Lasereinrichtung gemäß einem der Ansprüche 16 bis 26, bei der ein Wiederholfrequenz-Regelkreis (II, 220, 224) zur Regelung der Resonatorlängen-Stelleinrichtung (5) oder der Dispersions-Stelleinrichtung (7, 8, 8') in Abhängigkeit von der Frequenzabweichung mindestens einer Differenzfrequenz zwischen der Wiederholfrequenz der Lichtpulse von einer Radioreferenzfrequenz vorgesehen ist.

28. Lasereinrichtung gemäß Anspruch 27, bei der ein Radiofrequenzreferenzgenerator (250) zur Erzeugung der Radioreferenzfrequenz vorgesehen ist und der Wiederholfrequenz-Regelkreis eine Einrichtung zur Erzeugung eines Schwebungssignals aus dem Signal eines lichtempfindlichen Elements (221), das die Lichtpulse erfaßt, und dem Signal eines Radiofrequenzreferenzgenerators (250) und einen Wiederholfrequenz-Regler (224) für die Resonatorlängen-Stelleinrichtung (5) oder die Dispersions-Stelleinrichtung (7, 8, 8') umfaßt, wobei der Wiederholfrequenz-Regler (224) dazu ausgebildet ist, die Resonatorlängen-Stelleinrichtung oder die Dispersions-Stelleinrichtung (7, 8, 8') so zu betätigen, daß das zweite Schwebungssignal minimal ist oder eine vorbestimmte Schwebungsfrequenz besitzt.

29. Lasereinrichtung gemäß einem der Ansprüche 21 bis 28, bei der ferner ein Referenzlaser-Regelkreis (III, 231) zur Regelung des optischen Referenzfrequenzgenerators oder Referenzlasers (240) vorgesehen ist, mit einer Einrichtung (231) zur Erzeugung eines Schwebungssignals aus einer höherfrequenten Frequenzkomponente der Lichtpulse oder eines Teiles dieser Frequenzkomponente und einer Frequenz, die gleich einem Vielfachen der Referenzfrequenz ($f_{ref}$) ist, und einer Stelleinrichtung zur Einstellung des optischen Referenzfrequenzgenerators oder Referenzlasers (240) derart daß das Schwebungssignal minimal ist oder eine vorbestimmte Schwebungsfrequenz besitzt.

30. Lasereinrichtung gemäß einem der Ansprüche 16 bis 29, bei der das aktive Medium (4) ein Festkörper- oder ein Farbstoffmedium umfaßt.

31. Lasereinrichtung gemäß einem der Ansprüche 16 bis 30, bei der eine Einrichtung (201) zur Selbstphasenmodulation vorgesehen ist.

32. Verwendung eines Verfahrens oder einer Lasereinrichtung gemäß einem der vorhergehenden Ansprüche zur Messung optischer Frequenzen oder Frequenzdifferenzen, Erzeugung optischer Frequenzen, Überbrückung großer Frequenzdifferenzen in optischen Teilerketten, Erzeugung optischer Trägerfrequenzen in der Telekommunikationstechnik, spektroskopischen Vermessung atomarer elektronischer Übergänge, oder Überbrückung der Frequenz eines optischen Frequenznormals zu einer mit elektronischen Mitteln zählbaren Meßfrequenz.

**Claims**

1. A method of operating a laser device (1, 200) in which light pulses circulating in a resonator arrangement (3) are generated, which are each composed of spectral components corresponding to a plurality of longitudinal modes ($M$, $M_1$, $M_2$) of the resonator arrangement (3) and which are subjected to compensation of the group velocity dispersion, **characterized in that** a predetermined linear dispersion is introduced in the light path of the resonator arrangement (3), so that at least one mode has a specific frequency and/or the mode spacing between the modes has a specific value.

2. A method according to claim 1, in which the linear dispersion is introduced into the resonator arrangement (3) by a spectrally specific alteration of the resonator length in one resonator branch, which the light pulses pass through spectrally spatially separated after the compensation of the group velocity compensation.

3. A method according to claim 2, in which the linear dispersion is introduced into the resonator arrangement (3) by tilting a plane resonator end mirror (34).

4. A method according to claim 1, in which the linear dispersion is introduced into the resonator arrangement (3) by tilting a transparent plate, introducing a prism pair in the light path of the resonator arrangement (3), adjustment of the effective pump power for pumping the active medium of the laser device (1) or an alteration of the geometrical arrangement of the laser device relative to a pump laser.

5. A method according to any of the preceding claims, in which the linear dispersion is introduced into the resonator arrangement (3) in the setting of a mode control loop (I) in dependence on the frequency deviation of at least one first reference mode ($M_1$) of the light pulses from a reference frequency ($f_{ref}$), which is

   - the output frequency of an optical reference frequency generator (240),
   - a higher harmonic or an integral fraction of the output frequency or the higher harmonic,
   - a frequency multiplied lower frequency reference mode of the light pulses, or
   - a frequency divided higher frequency reference mode of the light pulses.

6. A method according to claim 5, in which light pulses of the laser device (1) and light with the reference frequency ($f_{ref}$) are superimposed in the mode control loop and directed on to a light-sensitive element (211), whose electrical output signal has a modulation at a beat frequency corresponding to the deviation of the frequency of the first reference mode ($M_1$) from the reference frequency ($f_{ref}$), wherein a control unit (214) is provided, which so adjusts the linear dispersion of the resonator arrangement (3) that the beat signal is at a minimum or has a predetermined beat frequency.

7. A method according to either of claims 5 and 6, in which the optical reference frequency generator (240) is stabilised in a reference laser control loop (III) relative to a second, higher frequency reference mode ($M_2$) of the light pulses.

8. A method according to any of claims 5 to 7, in which the optical reference frequency generator (240) is a stabilised continuous wave laser.

9. A method according to any of claims 1 to 4, in which the linear dispersion in the resonator arrangement (3) is introduced in the setting of a mode control loop (Ia, Ib) in dependence on the deviation of the multiplied frequency of a first reference laser (240a), which is phase coupled with a first lower frequency reference mode ($M_1$) of the light pulses, from the frequency of second reference laser (240b), which is phase coupled in a reference laser control loop (III) with a second higher frequency reference mode ($M_2$) of the light pulses.

10. A method according to claim 9, in which the second reference laser (240b) is phase coupled with the second higher frequency reference mode ($M_2$) of the light pulses through a divider stage.

11. A method according to any of the preceding claims, in which the resonator length of the laser device (1) is regulated in the setting of a repetition frequency control loop (II), in which the repetition frequency ($f_r$) of the light pulses is superimposed with a radio frequency, which is derived from a radio reference frequency generator (250), wherein a control unit (244) is provided, which so adjusts the resonator length of the laser device (1) that a beat frequency formed by the superimposition is at minimum or has a predetermined beat frequency.

12. A method according to any of claims 1 to 4, in which the linear dispersion is introduced into the resonator arrangement (3) in the setting of a repetition frequency control loop (II), in which the repetition frequency ($f_r$) of the light pulses is superimposed with a radio frequency which is derived from a radio reference frequency generator (250), wherein a control unit (224) is provided which so adjusts the linear dispersion of the resonator arrangement (3) that a beat signal formed by the superimposition is at a minimum or has a predetermined beat frequency.

13. A method according to claim 12, in which the resonator length of the laser device (1) is regulated in the setting of a mode control loop (I) in dependence on the frequency deviation of at least one first reference mode ($M_1$) of the light pulses from a reference frequency ($f_{ref}$) which is the output frequency of an optical reference frequency generator (240) or a higher harmonic or an integral fraction of the output frequency or the higher harmonic.

14. A method of operating a reference laser (240) at a stabilised optical frequency, in which the output frequency of the reference laser (240) or a higher harmonic or an integral fraction of the output frequency or the higher harmonic is phase coupled with a second reference mode ($M_2$) of light pulses which are generated with a laser device (1, 200) in accordance with a method according to any of claims 1 to 13, wherein the second reference mode ($M_2$) has a different frequency than the first reference mode ($M_1$).

15. A method of measuring the output frequency of a reference laser (240), in which a reference mode ($M_1$) of light pulses, which are generated with a laser device (1, 200) in accordance with a method according to any of claims 1 to 13, is phase coupled with the output frequency of the reference laser (240) or a higher harmonic or an integral fraction of the output frequency or higher harmonic and the output frequency is determined from the control parameters of the laser device.

16. A laser device (1, 200) for generating short pulses of light, which includes a resonator arrangement (3) with

   - an active medium (2),
   - a plurality of resonator mirrors with a coupling-in mirror (31) for coupling in pumping light for the active medium (2), a coupling-out mirror (32) for emission of the light pulses, and a plurality of path-folding mirrors (33a-c, 34), and
   - a compensating device (4) for compensating the group velocity dispersion of the light pulses,

   **characterized in that** the resonator arrangement (3) comprises a dispersion regulating device (7, 8, 8') for introducing a linear dispersion into the light path of the resonator arrangement (3).

17. A laser device according to claim 16, in which the dispersion regulating device (7) is arranged in a resonator branch on the side of the compensation device (4) facing away from the active medium (2).

18. A laser device according to claim 17, in which the dispersion regulating device (7) is a tilting device (7) acting on a path-folding mirror acting as a resonator end mirror (34).

19. A laser device according to claim 16, in which the dispersion regulating device comprises a transparent plate with a tilting device (8), a prism pair with a linear actuator (8'), which are disposed in the resonator arrangement (3), a device (9) for varying the effective pump power of the pump laser, or a device for altering the geometrical arrangement of the laser device relative to a pump laser.

20. A laser device according to claim 16, which is constructed as a ring laser.

21. A laser device according to any of claims 16 to 20, in which a resonator length regulating device (5) is provided for altering the resonator length by adjusting the position of one of the path-folding mirrors (33b).

22. A laser device according to any of claims 16 to 21, in which a mode control loop (I, 210, 214) is provided for regulating the dispersion regulating device (7, 8, 8') or the resonator length regulating device (5) in dependence on the frequency deviation of at least one frequency component of the light pulses from a reference frequency ($f_{ref}$), which is the output frequency of an optical reference frequency generator (240) or a higher harmonic or an integral fraction of the output frequency or the higher harmonic or a frequency multiplied lower frequency reference mode or a frequency divided higher frequency reference mode of the light pulses.

23. A laser device according to claim 22, in which the mode control loop (I, 210, 214) comprises a device (211) for generating a beat signal from the frequency component of the light pulses and the reference frequency ($f_{ref}$) and a mode control unit (214) for the dispersion regulating device (7) or the resonator length regulating device (5), wherein the mode control unit is formed to actuate the dispersion regulating device (7) or the resonator length regulating device (5) so that the beat signal is at a minimum or has a predetermined beat frequency.

24. A laser device according to claim 22 or 22, in which there are provided a reference laser (240) and optionally multiplier and/or divider stages for generating the reference frequency ($f_{ref}$) and the device for generating the beat signal comprises a light-sensitive element (211).

25. A laser device according to claim 24, in which the light sensitive element is provided with a filter element (212) for the spectrally selective detection of the light pulses.

26. A laser device according to any of claims 16 to 21, in which a mode control loop (Ia, Ib, 210, 214) is provided for regulating the dispersion regulating device (7, 8, 8') or the resonator length regulating device (5) in dependence on the deviation of the frequency of a first reference laser (240a), which is phase coupled with a first lower frequency reference mode ($M_1$) of the light pulses, from the frequency of a second reference laser (240b), which is phase coupled with a second ($M_2$) higher frequency reference mode of the light pulses.

27. A laser device according to any of claims 16 to 26, in which a repetition frequency control loop (II, 220, 224) is provided for regulating the resonator length regulating device (5) or the dispersion regulating device (7, 8, 8') in dependence on the frequency deviation of at least one difference frequency between the repetition frequency of the light pulses and a radio reference frequency.

28. A laser device according to claim 27, in which a radio frequency reference generator (250) is provided for generating the radio reference frequency and the repetition frequency control loop comprises a device for generating a beat signal from the signal of a light-sensitive element (221), which detects the light pulses, and the signal of a radio frequency reference generator (250), and a repetition frequency control unit (224) for the resonator length regulating device (5) or the dispersion regulating device (7, 8, 8'), wherein the repetition frequency control unit (224) is formed so to actuate the resonator length regulating device (5) or the dispersion regulating device (7, 8, 8') that the second beat signal is at a minimum or has a predetermined beat frequency.

29. A laser device according to any of claims 21 to 28, in which a reference laser control loop (III, 231) is further provided for regulating the optical reference frequency generator or reference laser (240), with a device (231) for generating a beat signal from a higher frequency frequency component of the light pulses or a fraction of this frequency component and a frequency which is equal to a multiple of the reference frequency ($f_{ref}$), and a regulating device for adjusting the optical reference frequency generator or reference laser (240) such that the beat signal is at a minimum or has a predetermined beat frequency.

30. A laser device according to any of claims 16 to 29, in which the active medium (4) comprises a solid body or a dyestuff medium.

**31.** A laser device according to any of claims 16 to 30, in which a device (210) for the auto-phase modulation is provided.

**32.** Use of a method or a laser device according to any of the preceding claims for measuring optical frequencies or frequency differences, generation of optical frequencies, bridging large frequency differences in optical divider chains, generation of optical carrier frequencies in telecommunications technology, spectroscopic measurement of atomic electronic transitions or bridging the frequency of an optical frequency standard to a measuring frequency which can be counted with electronic means.

## Revendications

**1.** Procédé pour la mise en oeuvre d'un dispositif à laser (1, 200), dans le cas duquel des impulsions de lumière circulant dans un ensemble de résonateurs (3) et se composant respectivement des composants spectraux selon une pluralité de modes longitudinaux (M, $M_1$, $M_2$) de l'ensemble de résonateurs (3) sont produites et sont soumises à une compensation de la dispersion de la vitesse de groupe, **caractérisé en ce qu'**une dispersion linéaire prédéterminée est introduite dans le trajet de lumière de l'ensemble de résonateurs (3), au moins un mode ayant une fréquence déterminée et/ou l'écart de modes entre les modes ayant une valeur déterminée.

**2.** Procédé selon la revendication 1, **caractérisé en ce que** la dispersion linéaire est introduite dans l'ensemble de résonateurs (3) par une modification active d'une manière spectrale spécifique de la longueur du résonateur dans une branche de résonateur, que les impulsions de lumière traversent après la compensation de la dispersion de la vitesse de groupe avec une séparation spectrale dans l'espace.

**3.** Procédé selon la revendication 2, **caractérisé en ce que** la dispersion linéaire dans l'ensemble de résonateurs (3) est introduite par le basculement d'un miroir terminal de résonateur plane (34).

**4.** Procédé selon la revendication 1, **caractérisé en ce que** la dispersion linéaire dans l'ensemble de résonateurs (3) est introduite par un basculement d'une plaque transparente, par une introduction d'une paire de prismes dans le trajet de lumière dans l'ensemble de résonateurs (3), par un réglage de la puissance effective de pompage pour le pompage du milieu actif du dispositif à laser (1) ou par une modification de la disposition géométrique du dispositif à laser par rapport à un laser de pompage.

**5.** Procédé selon l'une des revendications précédentes, **caractérisé en ce que** la dispersion linéaire dans l'ensemble de résonateurs (3) est introduite dans le cadre d'un circuit de régulation de mode (I) en fonction de la déviation de fréquence d'au moins un premier mode de référence ($M_1$) des impulsions de lumière d'une fréquence de référence ($f_{ref}$), qui est

- la fréquence de sortie d'un générateur optique de référence (240),
- une harmonique plus élevée ou une partie entière de la fréquence de sortie ou de l'harmonique plus élevée,
- un mode de référence des impulsions de lumière à basse fréquence multiplié en fréquence ou
- un mode de référence des impulsions de lumière à fréquence plus élevée et divisée en fréquence.

**6.** Procédé selon la revendication 5, **caractérisé en ce que** ces impulsions de lumière du dispositif à laser (1) et de la lumière ayant la fréquence de référence ($f_{ref}$) sont superposées dans le circuit de régulation de modes (I) et sont dirigées sur un élément sensible à la lumière (211), dont le signal de sortie électrique présente un modulation sous une fréquence de battement conformément à la déviation de la fréquence du premier mode de référence ($M_1$) par rapport à la fréquence de référence ($f_{ref}$), un régulateur (214), qui règle la dispersion linéaire de l'ensemble de résonateurs (3) de manière à ce que le signal de battement soit minimal ou ait une fréquence de battement prédéterminée, étant prévu.

**7.** Procédé selon l'une des revendications 5 ou 6, **caractérisé en ce que** le générateur de fréquence de référence optique (240) est stabilisé dans un circuit de régulation du laser de référence (III) par rapport à un deuxième mode de référence ($M_2$) de fréquence plus élevée des impulsions de lumière.

**8.** Procédé selon l'une des revendications 5 à 7, **caractérisé en ce que** le générateur de fréquence de référence optique (240) est un laser fonctionnant en régime continu stabilisé.

**9.** Procédé selon l'une des revendications 1 à 4, **caractérisé en ce que** la dispersion linéaire dans l'ensemble de résonateurs (3) est, dans le cadre d'un circuit de régulation de mode (Ia, Ib) en fonction de la déviation de la fréquence multipliée d'un premier laser de référence (240a), qui est couplé en phase avec un premier mode de référence à basse fréquence ($M_1$) des impulsions de lumière, introduite par la fréquence d'un deuxième laser de référence (240b), qui est couplé en phase dans un circuit de régulation du laser de référence (III) avec un deuxième mode de référence ($M_2$) de fréquence plus élevée des impulsions de lumière.

10. Procédé selon la revendication 9, **caractérisé en ce que** le deuxième laser de référence (240b) est couplé en phase par l'intermédiaire d'un étage de diviseur au deuxième mode de référence ($M_2$) de fréquence plus élevée des impulsions de lumière.

11. Procédé selon l'une des revendications précédentes, **caractérisé en ce que** la longueur des résonateurs du dispositif à laser (1) est réglée dans le cadre d'un circuit de régulation de fréquence de répétition (II), dans lequel la fréquence de répétition ($f_r$) des impulsions de lumière est superposée avec une fréquence radio, qui est déviée d'un générateur de fréquence de référence radio (250), un régulateur (224), qui règle la longueur de résonateurs du dispositif à laser (1) de manière à ce qu'un signal de battement formé lors de la superposition soit minimal ou ait une fréquence de battement prédéterminée, étant prévu.

12. Procédé selon l'une des revendications 1 à 4, **caractérisé en ce que** la dispersion linéaire est introduite dans l'ensemble de résonateurs (3) dans le cadre d'un circuit de régulation de fréquence de répétition (II), dans lequel la fréquence de répétition ($f_r$) des impulsions de lumière est superposée avec une fréquence radio, qui est dévié d'un générateur de fréquence de référence radio (250), un régulateur (224), qui règle la dispersion linéaire de l'ensemble de résonateurs (3) de manière à ce qu'un signal de battement formé lors de la superposition soit minimal ou ait une fréquence de battement prédéterminée, étant prévu.

13. Procédé selon la revendication 12, **caractérisé en ce que** la longueur des résonateurs du dispositif à laser (1) est réglée dans le cadre d'un circuit de régulation de modes (I) en fonction de la déviation de fréquence au moins d'un premier mode de référence ($M_1$) des impulsions de lumière par rapport à une fréquence de référence ($f_{ref}$), qui est la fréquence de sortie d'un générateur de fréquence de référence optique (240) ou une harmonique plus élevée ou une partie entière de la fréquence de sortie ou de l'harmonique plus élevée.

14. Procédé pour la mise en oeuvre d'un laser de référence (240) avec une fréquence optique stabilisée, dans le cas duquel la fréquence de sortie du laser de référence (240) ou une harmonique plus élevée ou une partie entière de la fréquence de sortie ou de l'harmonique plus élevée est couplée en phase avec un deuxième mode de référence ($M_2$) d'impulsions de lumière, qui sont générées par un dispositif à laser (1, 200) d'après un procédé selon l'une des revendications 1 à 13, le deuxième mode de référence ($M_2$) ayant une fréquence différente de celle du premier mode de référence ($M_1$).

15. Procédé pour la mesure de la fréquence de sortie d'un laser de référence (240), dans le cas duquel un mode de référence ($M_1$) d'impulsions de lumière, qui sont générées par un dispositif à laser (1, 200) d'après un procédé selon l'une des revendications 1 à 13, est couplé en phase avec la fréquence de sortie du laser de référence (240) ou avec une harmonique plus élevée ou avec une partie entière de la fréquence de sortie ou de l'harmonique plus élevée, et la fréquence de sortie est déterminée à partir des paramètres de régulation du dispositif à laser.

16. Dispositif à laser (1, 200) pour la génération de brèves impulsions de lumière qui comprend un ensemble de résonateurs (3) avec

- un milieu actif (2),
- une pluralité de miroirs de résonateurs avec un miroir d'entrée (31) pour l'introduction de la lumière de pompage pour le milieu actif (2), un miroir de sortie (32) pour la restitution des impulsions de lumière et plusieurs miroirs de renvoi (33a-c, 34) et
- un dispositif de compensation (4) pour la compensation de la dispersion de la vitesse de groupe des impulsions de lumière,

    **caractérisé en ce que**
    l'ensemble de résonateurs (3) comprend un dispositif de réglage de la dispersion (7, 8, 8') pour l'introduction d'une dispersion linéaire dans le trajet de lumière de l'ensemble de résonateurs (3).

17. Dispositif à laser selon la revendication 16, **caractérisé en ce que** le dispositif de réglage de la dispersion (7) est disposé dans une branche de résonateur sur le côté opposé au milieu actif (2) du dispositif de compensation (4).

18. Dispositif à laser selon la revendication 17, **caractérisé en ce que** le dispositif de réglage de la dispersion (7) est un dispositif pivotant (7) se trouvant sur un miroir de renvoi agissant comme miroir terminal de résonateur (34).

19. Dispositif à laser selon la revendication 16, **caractérisé en ce que** le dispositif de réglage de la dispersion (7) comprend une plaque transparente avec un dispositif de basculement (8), une paire de prismes avec un dispositif de poussée (8'), qui sont disposés dans l'ensemble de résonateurs (3), un dispositif (9) pour la variation de la puissance effective de pompage du laser de pompage ou un dispositif pour la modification de la disposition géométrique du dispositif à laser par rapport à un laser de pompage.

20. Dispositif à laser selon la revendication 16, **caractérisé en ce qu'**il est conçu en tant que laser circulaire.

21. Dispositif à laser selon l'une des revendications 16 à 20, **caractérisé en ce qu'**il est prévu un dispositif de réglage des longueurs de résonateurs (5) pour la modification de la longueur de résonateurs à l'aide du déplacement de la position de l'un des miroirs de déviation (33b).

22. Dispositif à laser selon l'une des revendications 16 à 21, **caractérisé en ce qu'**il est prévu un circuit de réglage des modes (I, 210, 214) pour le réglage du dispositif de réglage de la dispersion (7, 8, 8') ou du dispositif de réglage de la longueur des résonateurs (5) en fonction de la déviation de fréquence au moins d'une composante de fréquence des impulsions de lumière d'une fréquence de référence ($f_{ref}$), qui est la fréquence de sortie d'un générateur de fréquence de référence optique (240), ou une harmonique plus élevée, ou une partie entière de la fréquence de sortie ou de l'harmonique plus élevée, ou un mode de référence à basse fréquence multiplié en fréquence, ou un mode de référence des impulsions de lumière à fréquence plus élevée divisé en fréquence.

23. Dispositif à laser selon la revendication 22, **caractérisé en ce que** le circuit de régulation des modes (I, 210, 214) comprend un dispositif (211) pour la génération d'un signal de battement à partir de la composante de fréquence des impulsions de lumière et de la fréquence de référence ($f_{ref}$) et un régulateur de modes (214) pour le dispositif de réglage de la dispersion (7) ou le dispositif de réglage de la longueur des résonateurs (5), le régulateur de modes étant conçu pour actionner de telle manière le dispositif de réglage de la dispersion (7) ou le dispositif de réglage de la longueur des résonateurs (5) que le signal de battement soit minimal ou ait une fréquence de battement prédéterminée.

24. Dispositif à laser selon la revendication 22 ou 23, **caractérisé en ce qu'**il est prévu un laser de référence (240) et éventuellement des étages de multiplication et/ou de division pour la génération de la fréquence de référence ($f_{ref}$) et **en ce que** le dispositif pour la production du signal de battement comprend un élément sensible à la lumière (211).

25. Dispositif à laser selon la revendication 24, **caractérisé en ce que** l'élément sensible à la lumière est un élément de filtrage (212) pour la saisie spectrale sélective des impulsions de lumière.

26. Dispositif à laser selon l'une des revendications 16 à 21, **caractérisé en ce qu'**il est prévu un circuit de régulation des modes (Ia, Ib, 210, 214) pour le réglage du dispositif de réglage de la dispersion (7, 8, 8') ou du dispositif de réglage de la longueur des résonateurs (5) en fonction de la déviation de fréquence d'un premier laser de référence (240a), qui est couplé en phase avec un premier mode de référence à basse fréquence ($M_1$) des impulsions de lumière, par rapport à la fréquence d'un deuxième laser de référence (240b), qui est couplé en phase avec un deuxième mode de référence à fréquence plus élevée ($M_2$) des impulsions de lumière.

27. Dispositif à laser selon l'une des revendications 16 à 26, **caractérisé en ce qu'**il est prévu un circuit de régulation de la fréquence de répétition (II, 220, 224) pour le réglage du dispositif de réglage de la longueur des résonateurs (5) ou du dispositif de réglage de la dispersion (7, 8, 8') en fonction de la déviation de fréquence au moins d'une fréquence de différence entre la fréquence de répétition des impulsions de lumière et une fréquence de référence radio.

28. Dispositif à laser selon la revendication 27, **caractérisé en ce qu'**il est prévu un générateur de fréquence de référence radio (250) pour la génération de la fréquence de référence radio et **en ce que** le circuit de régulation de la fréquence de répétition comprend un dispositif pour la génération d'un signal de battement à partir du signal d'un élément sensible à la lumière (221), qui saisit les impulsions de lumière, et du signal d'un générateur de fréquence de référence radio (250), et un régulateur de fréquence de répétition (224) pour le dispositif de réglage de la longueur des résonateurs (5) ou le dispositif de réglage de la dispersion (7, 8, 8'), le régulateur de la fréquence de répétition (224) étant conçu pour actionner de telle manière le dispositif de réglage de la longueur des résonateurs (5) ou le dispositif de réglage de la dispersion (7, 8, 8') que le deuxième signal de battement soit minimal ou ait une fréquence de battement prédéterminée.

29. Dispositif à laser selon l'une des revendications 21 à 28, **caractérisé en ce qu'**il est prévu par ailleurs un circuit de régulation du laser de référence (III, 231) pour la régulation du générateur de fréquence de référence optique ou du laser de référence (240), avec un dispositif (231) pour la génération d'un signal de battement à partir d'une composante de fréquence à haute fréquence des impulsions de lumière ou d'une partie de cette composante de fréquence et d'une fréquence, qui est égale à un multiple de la fréquence de référence ($f_{ref}$), et avec un dispositif de régulation pour le réglage du générateur de fréquence de référence optique ou du laser de référence (240), et ceci de telle façon que le signal de battement soit minimal ou ait une fréquence de battement prédéterminée.

30. Dispositif à laser selon l'une des revendications 16 à 29, **caractérisé en ce que** le milieu actif (4) comprend un milieu à corps solides ou à colorants.

31. Dispositif à laser selon l'une des revendications 16 à 30, **caractérisé en ce qu'**il est prévu un dispositif (201) d'automodulation des phases.

32. Utilisation d'un procédé ou d'un dispositif à laser selon l'une des revendications précédentes pour la mesure de fréquences optiques ou de différences de fréquences, pour la génération de fréquences optiques, pour shunter d'importantes différences de fréquences dans des chaînes de diviseurs optiques, pour la génération de fréquences porteuses optiques dans les techniques de télécommunication, pour la mesure spectroscopique de transferts atomiques électroniques ou pour shunter la fréquence d'une fréquence étalon optique pour une fréquence de mesure pouvant être évaluée avec des moyens électroniques.

Fig. 1

Fig. 2

Fig. 3

Fig. 4

Ref.-Laser @ f → (x2) → Laser @ 2f

M 1

M 2

N

f

## Fig. 5

Ref.-Laser @ f → (x2) → Laser @ 2f

$f_1$

$f_2$

$$\frac{f_1 + f_2}{2}$$

Laser @ 3/2 f

M 1

M 2

f

$f_N$

$f_{rep}$

## Fig. 6

972 nm → (x2) → 486 nm

648 nm

778 nm

Fig. 7

77THz

1560 nm → (x2) → 780 nm

1040 nm

891 nm

48THz

Fig. 8

244,000 Moden o. 18.39 THz

$I$

95

modengek. Laser

848.1 nm Diodenlaser    $4f_{CH4}$    93

894.6 nm Diodenlaser    96

1/128    94

x2  LiIO$_3$

1.696 µm Farbzentrenlaser    $2f_{CH4}$    92

Cs-Sättigungs-spektrometer

$4f_{CH4}$ - 18.37 THz

x2  AgGaSe$_2$

3.39 µm CH$_4$ stabil. HeNe-Laser    91

Fig. 9

saturation signal /
[arbitr. units]

$F_g = 4 \longrightarrow F_e = 4$

Fig. 10

detuning from 335 112 537 894 kHz / [MHz]

-30    -20    -10    0    10    20    30

Laser #1    $f_1$

Laser #2    $f_2$

$\Delta f$

$+$

$f_1 + f_2$

$\Phi$

$2f_3$

$\times 2$

$\Delta f/2$

Laser #3    $f_3$

Symbol:    $f_3 = (f_1 + f_2)/2$

$f_1$        $f_2$

Fig. 13

FIG. 11

Fig. 12